(19) Europäisches Patentamt
European Patent Office
Office européen des brevets

(11) **EP 1 618 074 B1**

(12) **EUROPÄISCHE PATENTSCHRIFT**

(45) Veröffentlichungstag und Bekanntmachung des Hinweises auf die Patenterteilung:
**15.07.2009 Patentblatt 2009/29**

(21) Anmeldenummer: **04724597.2**

(22) Anmeldetag: **31.03.2004**

(51) Int Cl.:
*C03B 5/24* *(2006.01)*  *C03C 1/00* *(2006.01)*
*C03B 5/02* *(2006.01)*  *C03B 5/03* *(2006.01)*
*C03B 5/193* *(2006.01)*

(86) Internationale Anmeldenummer:
**PCT/EP2004/003416**

(87) Internationale Veröffentlichungsnummer:
**WO 2004/087587 (14.10.2004 Gazette 2004/42)**

(54) **SCHMELZEN UND LÄUTERN IN WANNEN MIT GEKÜHLTEN WÄNDEN**

MELTING AND REFINING IN BATHS WITH COOLED WALLS

FUSION ET AFFINAGE DANS DES CUVES A PAROIS REFROIDIES

(84) Benannte Vertragsstaaten:
**FR**

(30) Priorität: **02.04.2003 DE 10314955**

(43) Veröffentlichungstag der Anmeldung:
**25.01.2006 Patentblatt 2006/04**

(73) Patentinhaber: **Schott AG**
**55122 Mainz (DE)**

(72) Erfinder:
• **KIEFER, Werner**
**55126 Mainz (DE)**
• **RÖMER, Hildegard**
**65439 Flörsheim (DE)**
• **LENTES, Frank, Thomas**
**55411 Bingen (DE)**
• **RÄKE, Guido**
**55452 Rümmelsheim (DE)**
• **OHMSTEDE, Volker**
**55411 Bingen (DE)**
• **NAUMANN, Karin**
**55270 Ober-Olm (DE)**
• **LEISTER, Michael**
**55257 Budenheim (DE)**
• **NÜSSLE, Gerhard**
**07751 Jena (DE)**
• **RODEK, Erich**
**55126 Mainz (DE)**
• **SCHMIDBAUER, Wolfgang**
**55126 Mainz (DE)**

(74) Vertreter: **Herden, Andreas F. et al**
**Blumbach - Zinngrebe**
**Patentanwälte**
**Alexandrastrasse 5**
**65187 Wiesbaden (DE)**

(56) Entgegenhaltungen:
EP-A- 1 078 889    DE-A- 10 003 948
DE-A- 10 138 108    DE-B- 1 211 363
FR-A- 1 306 851    US-A- 4 246 433

• DATABASE WPI Section Ch, Week 200328 Derwent Publications Ltd., London, GB; Class K07, AN 2003-285834 XP002273086 & KR 2002 050 331 A (KOREA HYDRO & NUCLEAR POWER CO LTD) 27. Juni 2002 (2002-06-27)
• J NON CRYST SOLIDS; JOURNAL OF NON-CRYSTALLINE SOLIDS DEC 11 1998 ELSEVIER SCI B.V., AMSTERDAM, NETHERLANDS, Bd. 242, Nr. 2-3, 11. Dezember 1998 (1998-12-11), Seiten 183-188, XP002287334

## EP 1 618 074 B1

**Beschreibung**

Die Erfindung betrifft ein Verfahren zum Schmelzen und /oder Läutern in Schmelz- oder Läuteraggregaten mit gekühlten Wänden.

Ziel der Erfindung ist es, ein Verfahren mit verringertem Energieverbrauch beim Schmelzen und/oder Läutern von anorganischen Stoffen, vorzugsweise Gläsern, Glaskeramiken und Kristallen bereitzustellen. Bevorzugt soll die Erfindung in einem Schmelz- oder Läuteraggregat mit gekühlten Wänden, wie zum Beispiel in einem Skulltiegel, oder einer konduktiv geheizten Wanne Anwendung finden.

Aus dem Stand der Technik sind eine Reihe von Schmelzaggregaten mit gekühlten Wänden beschrieben, vor allem von Skulltiegeln, die zum Schmelzen von Gläsern mit Hilfe von Hochfrequenz dienen.

Unter einem Hochfrequenz beheizten Skulltiegel wird hier ein Tiegel verstanden, der aus gekühlten Metallrohren gebildet wird und mit einer Hochfrequenzspule umgeben ist. Zwischen den Metallrohren befinden sich Spalten, wodurch eine direkte Einkopplung der Hochfrequenzenergie in die Glasschmelze möglich ist.

Unter einer konduktiv beheizten Wanne oder einem konduktiv beheizten Tiegel wird hier eine Wanne oder ein Tiegel verstanden, bei welchem Wärmezufuhr zumindest zu einem Teil durch mittels Elektroden eingeleitete Gleich- oder Wechselströme erfolgt.

Das Schmelzen von Gläsern in einem Skulltiegel bringt, durch die Bildung einer Skullschicht aus arteigenem Material an den gekühlten Metallrohren, eine Menge an Vorteilen mit sich. In einem Skulltiegel können hochreine und/ oder sehr aggressive und/oder hochschmelzende Gläser geschmolzen und erschmolzen werden. DE-A-10138108 offenbart das Schmelzen und das Läutern von Glasschmelzen in derartigen Skulltiegeln.

Hochschmelzende Gläser, die erst oberhalb 1600 bis 1700 °C schmelzen, können in einem Schmelzaggregat mit gekühlten Wänden geschmolzen werden, da sich die Skullschicht aus arteigenem Material auch bei hohen Temperaturen ständig nachbildet und derart vor externen Verunreinigungen schützt.

Auch bei chemisch sehr aggressiven Gläsern bildet sich eine Skullschicht aus arteigenem Material aus, die den Angriff der Glasschmelze auf die gekühlten Metallrohre verhindert.

Beim Schmelzen hochreiner Gläser verhindert die arteigene Skullschicht insbesondere auch, dass von der Glasschmelze gelöstes Tiegelmaterial in die Glasschmelze gelangt. Da oxidierte Bestandteile der gekühlten Metallrohre, wie insbesondere Metallionen in sehr geringen Mengen durch die Skullschicht hindurch diffundieren können, müssen bei extremen Reinheitsanforderungen spezielle Metallrohre verwendet werden, wie zum Beispiel Metallrohre aus Platinmetallen, Aluminiumrohre oder Kunststoff beschichtete Metallrohre.

Das Schmelzen in einem Schmelzaggregat mit gekühlten Wänden, wie zum Beispiel einem Skulltiegel hat jedoch den Nachteil, dass das Verfahren sehr energieaufwendig ist, da zur Kühlung der Wände und/oder zur Erzeugung einer arteigenen Skullschicht die Wände stark gekühlt werden müssen und somit der Glasschmelze sehr viel Energie entziehen.

Dabei ist der Temperaturunterschied zwischen der erhitzten Schmelze und dem kühleren Wandbereich ein direktes Maß für der Energieverlust durch Wärmeabgabe. Bei höheren Schmelz- oder Läutertemperaturen wird dieser Temperaturunterschied mit erhöht und wird folglich auch der Energieverlust durch Wärmeabgabe gesteigert.

Da sowohl Hochfrequenzenergie als auch eingespeiste konduktive Ströme, beispielsweise gegenüber fossilen Brennstoffen, kostenintensive Energieträger sind, stehen die vorstehend erwähnten Schmelz- und Läuterverfahren im Ruf, teuer und energieaufwendig zu sein. Insbesondere eine zusätzliche Temperaturerhöhung wurde analog zu konventionellen Wannen als direktes Maß für zusätzliche Kosten angesehen.

Bei den konventionellen Schmelzwannen wird versucht, die Wärmeableitung durch die Wände und den Boden, d.h. den Energieverlust durch eine gute thermische Isolation der Schmelzwannen so gering wie möglich zu halten.

Der Energieverlust pro Gewichtseinheit $E_v$ ist vom Durchsatz abhängig. Gleiche Glasqualität vorausgesetzt, ist eine Durchsatzerhöhung meist mit einer Temperaturerhöhung verbunden.

Konventionelle Wannen mit Wänden aus metallischen oder keramischen Refraktärmaterialien können nur auf die für die Refraktärmaterialien zulässige Temperatur erhitzt werden, für die metallischen Refraktärmaterialien wie zum Beispiel Platinmetallen aber nicht höher als 1500 °C und beim Einsatz von keramischen Refraktärmaterialien nicht höher als 1600 °C, in Ausnahmefällen kurzfristig bis maximal 1700 °C.

Bei konventionellen Wannen wird somit die maximale Schmelztemperatur durch die eingesetzten Refraktärmaterialien bestimmt. Mit der maximalen Schmelztemperatur ist auch der maximale Durchsatz über die Refraktärmaterialen vorgegeben.

Weiterhin kann es bei den konventionellen Wannen Probleme geben, die für die Temperaturerhöhung nötige Energie in die Wanne einzubringen, da durch die höhere Brennertemperatur das Gewölbe stärker angegriffen wird und bei elektrischer Zusatzheizung die Elektroden stark angegriffen werden. Mit der Temperaturerhöhung ist auch eine Erhöhung der Konvektion der Glasschmelze in der Schmelzwanne verbunden, die ihrerseits einen erheblich höheren Wannenangriff zur Folge haben.

Ein erhöhter Wannenangriff verkürzt zum einen die Standzeit der Wanne und zum anderen bringt sie eine Verschlechterung der Glasqualität. Eine Erhöhung des Durchsatzes birgt bei konventionellen Wannen somit auch immer die Gefahr.einer Verschlechterung der Glasqualität durch Schmelzrelikte. Bei einer gasbefeuerten Wanne bedeutet eine höhere Glastemperatur auch gleichzeitig eine höhere Oberofentemperatur. Damit verbunden ist eine höhere Erzeugung umweltschädlicher Stickoxide, $NO_x$, in der Atmosphäre. Viele Wannen fahren bereits an den derzeit erlaubten Grenzwerten.

Eine Erhöhung des Durchsatzes durch Temperaturerhöhung sind somit bei den konventionellen Wannen sehr enge Grenzen gesetzt und ist aus energetischer Sicht nicht sinnvoll.

Beim Schmelzen in einem Schmelzaggregat mit gekühlten Wänden, wie z.B. einem Skulltiegel, ist bei gleicher Schmelztemperatur der Wärmeverlust pro Flächeneinheit sehr viel höher als der Energieverlust pro Flächeneinheit bei den thermisch gut isolierten Wänden einer konventionellen Wanne.

Darüber hinaus steigt der Energieverlust bei Temperaturerhöhung beim Skulltiegel, wie vorstehend erläutert, stärker an als bei konventionellen Wannen. Dieser deutlich höhere Energieverlust der Schmelzaggregate mit gekühlten Wänden gegenüber den konventionellen Wannen ist der Grund für die geringe Verbreitung für das Schmelzen in Aggregaten mit gekühlten Wänden, wie z.B. dem Schmelzen in Skulltiegeln.

Das Skullschmelzverfahren wird z.B. trotz gravierender Vorteile gegenüber den konventionellen Wannen bisher nur dort eingesetzt, wo die konventionellen Schmelzverfahren versagen.

Die Aufgabe der Erfindung besteht nun darin ein Verfahren zu finden, bei dem einerseits die großen Vorteile eines Schmelzaggregates mit gekühlten Wänden erhalten bleiben, mit dem es aber andererseits möglich ist, den Energiebedarf pro Gewichtseinheit fertigen Schmelzguts, der beim Schmelzen in Wannen mit gekühlten Wänden auftritt, deutlich herab zu senken.

Diese,Aufgabe wird erfindungsgemäß in höchst überraschender Weise mit einem Verfahren mit den Merkmalen eines Verfahrens gemäß Anspruch 1 gelöst. Vorteilhafte Weiterbildungen des erfindungsgemäßen Verfahrens sind Gegenstand der Unteransprüche.

Es wurde in höchst überraschend Weise von den Erfindern herausgefunden, dass in einem Schmelzaggregat mit gekühlten Wänden, zum Beispiel in einem Skulltiegel der Energieverbrauch pro Gewichtseinheit geschmolzenem Glas $E_{tot}$ deutlich verringert werden kann, wenn die Temperatur T der Schmelze erhöht und die Aufenthaltszeit t der Schmelze im Schmelzaggregat V verkürzt werden.

Das erfindungsgemäße Verfahren zum Schmelzen anorganischer Materialien, vorzugsweise von Gläsern und Glaskeramiken in einem Schmelzaggregat mit gekühlten Wänden sieht demgemäß vor, dass

- dem Schmelzaggregat Schmelzgut zugeführt und durch Zuführung von Heizenergie erhitzt wird, wobei
- die Temperatur $T_{eff}$, welche an späterer Stelle noch genauer beschrieben wird, bestimmt wird, bei der der Energieverbrauch pro Gewichtseinheit des Schmelzguts bei angepasstem Durchsatz minimal ist, und
- die Temperatur der Schmelze in dem Schmelzaggregat so gewählt ist, dass sie in einem Bereich von $T_{eff}$ - 20% bis $T_{eff}$ + 20% liegt und
- der Durchsatz so gewählt wird, dass er an die erforderliche Verweilzeit angepasst ist.

Eine Vorrichtung zum Schmelzen anorganischer Materialien, vorzugsweise von Gläsern und Glaskeramiken, mit welcher insbesondere auch das erfindungsgemäße Verfahren durchgeführt werden kann, umfasst

- ein Schmelzaggregat mit gekühlten Wänden,
- eine Einrichtung zur Zuführung von Schmelzgut,
- eine Einrichtung zur direkten Beheizung einer Schmelze,
- eine Einrichtung zur Einstellung einer Temperatur, die zumindest $T_{eff}$ - 20% bis $T_{eff}$ + 20% in zumindest, einem Bereich der Schmelze beträgt, wobei die Temperatur $T_{eff}$ gegeben ist durch die Temperatur, bei welcher der Energieverbrauch pro Gewichtseinheit des Schmelzguts bei an die zu gegebener Temperatur erforderliche Verweilzeit angepasstem Durchsatz minimal ist, und
- eine Einrichtung zur Anpassung des relativen Durchsatzes von Schmelzgut an die erforderliche Verweilzeit in der Schmelze.

Die Erfinder haben experimentell gefunden, dass der Energieverbrauch pro Gewichtseinheit $E_{tot}$ mit steigender Temperatur zunächst abnimmt und durch ein Minimum geht, um bei noch höheren Temperaturen wieder anzusteigen. Die Temperatur, bei der der Energieverbrauch pro Gewichtseinheit $E_{tot}$ sein Minimum aufweist, wird im folgenden mit $T_{eff}$ bezeichnet.

Bei der Temperatur $T_{eff}$ gilt

$$(1) \quad dE_{tot}/dT \Big|_{T=T_{eff}} = 0 = dE_N/dT \Big|_{T=T_{eff}} + dE_v/dT \Big|_{T=T_{eff}}$$

gesetzt.

Die Bestimmung von $T_{eff}$ kann beispielsweise aus experimentellen Werten ermittelt werden, wie etwa anhand der Beispiele weiter unten erläutert ist.

Dabei steht $E_{tot}$ für den gesamte Energieverbrauch pro Gewichtseinheit geschmolzenes.Glas und setzt sich zusammen aus der Nutzwärme pro Gewichtseinheit $E_N$ und dem Energieverlust pro Gewichtseinheit $E_v$.

Anstelle von $T_{eff}$ kann in erster Näherung auch die Temperatur ermittelt werden, bei der die Energieverlust pro Gewichtseinheit auf den Wert der Nutzwärme pro Gewichtseinheit abgefallen ist. Dementsprechend wird dazu die Temperatur ermittelt, bei der gilt:

$$(2) \quad E_v = E_N$$

Vorzugsweise wird außerdem der Schmelze Wärmeenergie direkt zugeführt, beziehungsweise direkt in der Schmelze Energie in Wärmeenergie umgewandelt. Dies kann beispielsweise mittels entsprechender Einrichtungen durch direkte konduktive Beheizung und/oder durch direkte induktive Beheizung erfolgen.

Die in der Schmelze ablaufenden Prozesse sind von der absoluten Temperatur abhängig. Dementsprechend ist der Bereich $T_{eff}$ - 20% bis $T_{eff}$ + 20% insbesondere auf die absolute Temperatur bezogen.

Als relativer Durchsatz wird hier der Durchsatz D [Masse/Zeiteinheit] bezogen auf die Schmelzenmenge V * $\rho$ im Schmelzaggregat verstanden, wobei V das Volumen und $\rho$ die Dichte der Schmelze bezeichnen. Für den relativen Durchsatz $D_{rel}$ folgt damit:

$$(3) \quad D_{rel} = D/(V * \rho) = 1/t.$$

Dabei bezeichnet t die mittlere Verweilzeit.

Der relative Durchsatz hat damit die Dimension einer reziproken Zeit.

Die erforderliche Verweilzeit wird durch das mit dem Verfahren zu erreichende Ergebnis bestimmt. Gemäß einer Ausführungsform der Erfindung wird mit dem Verfahren Gemenge eingeschmolzen so dass hier die erforderliche Verweilzeit dementsprechend die Einschmelzzeit umfasst.

Gemäß einer weiteren Ausführungsform wird mit dem Verfahren Schmelzgut geläutert, so dass die erforderliche Verweilzeit die für das Läutern notwendige Zeit umfasst. Auch kann in einem Aggregat mit gekühlten Wänden sowohl eingeschmolzen, als auch geläutert werden. Dabei umfasst entsprechend die erforderliche Verweilzeit die für das Einschmelzen und Läutern notwendige Zeit. Unter der erforderlichen Verweilzeit wird außerdem die mittlere Verweilzeit des Schmelzguts im Schmelzaggregat verstanden.

Der Bereich von $T_{eff}$ - 20% bis $T_{eff}$ + 20% erweist sich als besonders günstig für den Energieverbrauch pro Gewichtseinheit des Schmelzguts.

Bei sehr hohen Durchsätzen bzw. sehr kurzen Aufenthaltszeiten der Schmelze im Schmelzaggregat spielen nicht nur die physikalischen Prozesse, wie beispielsweise die Aufstiegsgeschwindigkeit der Blasen bei der Läuterung eine Rolle, sondern auch die chemischen Reaktionen, insbesondere die Kinetik, mit der sich die thermodynamischen Gleichgewichte in der Schmelze einstellen. Durch die Temperaturerhöhung der Glasschmelze wird neben den physikalischen Prozessen, zum Beispiel der Blasenaufstiegsgeschwindigkeit, auch die Kinetik der Einstellung der thermodynamischen Gleichgewichte, beispielsweise durch die höhere Diffusionsgeschwindigkeit der Gase zu den Läuterblasen erhöht. Die Beschleunigung der Kinetik erlaubt bei hohen Temperaturen eine ausreichend hohe Durchsatzsteigerung, so dass der erhöhte Energieverlust pro Gewichtseinheit bei höheren Temperaturen durch die angepasste Durchsatzsteigerung mehr als ausgeglichen wird. Dazu ist ein Heizverfahren erforderlich, welches der Schmelze ausreichend Heizenergie zuführen kann, um zumindest einen Bereich der Schmelze trotz der Kühlung der Wände auf die vorgesehene Temperatur bringen zu können.

Im folgenden wird das Verfahren anhand einer etwas vereinfachenden Betrachtung näher erläutert. Zur Verdeutlichung sind zu einigen Größen dabei in eckigen Klammern Einheiten angegeben, wobei beispielhaft für das Gewicht die Einheit Kilogramm [kg], für die Zeit die Einheit Stunden [h], für die Leistung die Einheit Kilowatt [kW] und für die Energie Kilowattstunden [kWh] gewählt wurden.

Die Erfinder fanden heraus, dass bei korrekter und erweiterter Betrachtung eine energiesparende Schmelze in Aggregaten mit gekühlten Wänden möglich ist, wenn beim Schmelzen von Gläsern zwischen Nutzwärme einerseits und Energieverlust andererseits unterschieden wird. Der gesamte Energieverbrauch pro Gewichtseinheit geschmolzenes Glas $E_{tot}$ setzt sich zusammen aus der Nutzwärme pro Gewichtseinheit $E_N$ und dem Energieverlust pro Gewichtseinheit $E_v$.

$$(4) \quad E_{tot} = E_N + E_v$$

Als Nutzwärme pro Gewichtseinheit, $E_n$, wird die Wärmemenge pro Gewichtseinheit geschmolzenem Glas bezeichnet, die einem Glasgemenge und/oder Scherben zum Aufheizen und Aufschmelzen zugeführt werden muss. Die Nutzwärme pro Gewichtseinheit umfasst:

- die Wärmemenge pro Gewichtseinheit zum Aufheizen des Gemenges und/oder der Scherben: $E_{N1} = c_{p1} * \Delta T_1$, wobei $\Delta T_1$ die Temperaturdifferenz zwischen der Ausgangstemperatur bis zur Schmelz- oder Übergangstemperatur bezeichnet,
- die latente Wärme pro Gewichtseinheit: $E_{N2} = \Delta H$, sowie
- die Wärmemenge pro Gewichtseinheit zum Aufheizen der Glasschmelze auf die gewünschte Prozeßtemperatur: $E_{N3} = c_{p2} * \Delta T_2$. Dabei bezeichnet $\Delta T_2$ die Temperaturdifferenz von der Schmelz- oder Übergangstemperatur bis zur gewählten Prozeßtemperatur, die erfindungsgemäß in zumindest einem Bereich der Schmelze in einem Bereich von $T_{eff}$ -20% bis $T_{eff}$ +20% legt.

Die latente Wärme $\Delta H$ umfaßt die Reaktions- und/oder Phasenübergangswärme beim Aufschmelzen oder beim Glasübergang des Schmelzguts, welches beispielsweise in Form von Gemenge und/oder Scherben zugegeben wird.

Für eine erste Näherung kann die spezifische Wärmekapazität des Schmelzguts unterhalb der Schmelz- oder Übergangstemperatur $c_{p1}$ und die spezifische Wärmekapazität des Schmelzguts oberhalb der Schmelz- oder Übergangstemperatur, $c_{p2}$ gleichgesetzt werden, so daß gilt:

$$(5) \quad c_{p1} = c_{p2} = c_p \ .$$

Für $E_N$ ergibt, sich dann:

$$(6) \quad E_N = c_p * \Delta T + \Delta H, \ mit \ \Delta T = \Delta T_1 + \Delta T_2.$$

Die Nutzwärme, insbesondere die benötigte Nutzwärme für das Läutern, ist somit direkt proportional zum Durchsatz und der Schmelztemperatur. Die Nutzwärme pro kg geschmolzenes Glas $E_N$ ist unabhängig von der Schmelzzeit und dem Schmelzverfahren.

Vom Schmelzverfahren abhängig ist dagegen der Energieverlust.

Ein Energieverlust findet vor allem statt durch:

- die Wärmeabstrahlung an der Glasoberfläche
- die Wärmeableitung durch die Wände und den Boden des Schmelzgefäßes, und
- die Wärmeableitung der heißen Gase bei vorhandener Gas- oder Ölbeheizung.

In der vereinfachten Betrachtung wird unter anderem der Beitrag der Wärmeabstrahlung zum Energieverlust nicht berücksichtigt.

Der Energieverlust pro Zeit gibt an, welche Wärmemenge pro Zeiteinheit kWh/h verloren geht. Beim Energieverlust pro Zeit handelt es sich somit um eine Energieverlustleistung kWh/h = kW.

Der Energieverlust pro Gewichtseinheit gibt unter Berücksichtigung des Durchsatzes an, welche Wärmemenge pro

Gewichtseinheit $E_v$ verloren geht.

Der.Energieverlust, bzw. der Energieverlust pro Gewichtseinheit sind vom jeweiligen Schmelzaggregat abhängig.

Der Energieverlust durch die Abstrahlung aus der Glasoberfläche hängt zum einen davon ab, ob die Oberfläche frei ist, oder ob die Oberfläche durch einen Gemengeteppich oder Blasenteppich abgedeckt ist. Die Wärmeabstrahlung an der Glasoberfläche wird deutlich geringer, wenn die Oberfläche der Glasschmelze mit einem Gemengeteppich oder Blasenteppich abgedeckt ist. Zum anderen wird die von der Glasoberfläche abgestrahlte Wärme von dem Gewölbe der Schmelzwannen wieder reflektiert. Der Wärmeverlust durch die Oberfläche entsteht durch den Wärmeverlust durch die Wand des Gewölbes.

Bei konventionellen Wannen und bei Schmelzaggregaten mit gekühlten Wänden und einer Hochfrequenz- oder konduktiven Beheizung ist der Energieverlust pro Flächeneinheit durch die Wärmeabstrahlung an der Oberfläche bei gleicher Temperatur und Oberflächenabdeckung im wesentlichen gleich.

Bei Gas- oder Ölbefeuerung kommt bei konventionellen Wannen noch der Wärmeverlust durch das heiße ausströmende Gas hinzu.

Im Gegensatz zu den konventionellen Wannen, bei denen die obere Schmelztemperatur durch den Wannenangriff begrenzt wird, ist beim Schmelzen in Schmelzaggregaten mit gekühlten Wände die Schmelztemperatur durch den Wannenangriff im wesentlichen nicht eingeschränkt.

Die Erfinder fanden überraschend heraus, dass bei einem Schmelzaggregat mit gekühlten Wänden wie zum Beispiel einem Skulltiegel, entgegen der bestehenden Meinung, bei Erhöhung der Schmelztemperatur trotz dem erhöhten Energieverlust durch die Wand und den ,Boden und der höheren Nutzenergie zum Aufheizen der Schmelze der Energieverbrauch pro Gewichtseinheit abgesenkt werden kann, wenn die Aufenthaltszeit der Schmelze im Schmelzaggregat entsprechend der erhöhten Reaktionsgeschwindigkeit verkürzt wird.

Der Energieverlust durch die Wand und den Boden ist abhängig von dem Wärmedurchgang $k$ [$kW/cm^2 \cdot K$], der Temperatur der Schmelze [T] und der gekühlten Wandfläche $F$ [$cm^2$] des Schmelzaggregates.

Bei den Schmelzaggregaten ändert sich das Oberflächen- zu Volumen-Verhältnis der Schmelze mit ihrem Volumen. Dieses Verhältnis wird im folgenden mit $F_0$ bezeichnet, wobei die maßgebliche Oberfläche im wesentlichen die Oberfläche der Schmelze darstellt, welche in Kontakt mit den gekühlten Wänden des Schmelaggregats ist.

$$(7) \qquad F_0 = F / V \qquad [1/m].$$

Anstelle der Fläche $F$ kann somit auch der Flächen/Volumen-Faktor $F_0$ mal dem Schmelzvolumen $V$ eingesetzt werden.

Für den Energieverlust durch die Wände, $E_v$, kann vereinfacht angesetzt werden

$$(8) \quad Energieverlust = k * T * F = k * T * F_0 * V.$$

Der Energieverlust pro Gewichtseinheit $E_v$ ist bei einem vorgegebenen Schmelzvolumen zusätzlich abhängig vom Durchsatz $D$ ( kg/h ), so dass sich für $E_v$ ergibt:

$$(9) \qquad E_v = k * T * F * 1/D \quad [kWh/kg]$$

oder

$$(10) \qquad E_v = k * T * F_0 * V * 1/D \quad [kWh/kg] \; )$$

Der Durchsatz $D$ der Schmelze, beziehungsweise der relative Durchsatz $D_{rel}$ wird durch die Aufenthaltszeit $t$ der Schmelze im Volumen $V$ des Schmelzaggregates bestimmt.

$$(11) \qquad D = V * \rho / t ( kg/h ); D_{rel} = V * \rho / t*(V * \rho) = 1/t$$

$$(12) \qquad 1/D = t / ( V * \rho ); 1/D_{rel} \approx t$$

Daraus ergibt sich für $E_v$ :

$$(13) \qquad E_v = k * T * F * 1/V * 1/\rho * t \; [kWh/kg],$$

oder unter Verwendung von Gleichung (5):

$$(14) \qquad E_v = k * T * F_0 * V * 1/V * 1/\rho * t,$$

beziehungsweise:

$$(15) \qquad E_v = k * T * F_0 * 1/\rho * t \;\; [kWh/kg] )$$

Die erforderliche Verweilzeit $\tau$ der Schmelze im Schmelzaggregat V ist abhängig von der jeweiligen Reaktionsgeschwindigkeit zum Beispiel der Auflösungsgeschwindigkeit des Gemenges oder der Aufstiegsgeschwindigkeit der Läuterblasen. Für $\tau$ kann vereinfachend mit einer Konstanten E, die einer charakteristischen Aktivierungstemperatur entspricht, angesetzt werden:

$$(16) \; \tau = \tau_0 * e^{+E/T}$$

Dabei bezeichnet $\tau_0$ die erforderliche Verweilzeit bei einer Referenztemperatur $T_0$. Hieraus ergibt sich $E_v$, wenn die erforderliche Verweilzeit $\tau$ an die mittlere Verweilzeit t, beziehungsweise den relativen Durchsatz $D_{rel} = 1/t$ angepaßt wird, so daß dementsprechend t=$\tau$ gilt, zu:

$$(17) \; E_v = k * T * F_0 * 1/\rho * \tau_0 * e^{+E/T}$$

Der Energieverbrauch pro Gewichtseinheit $E_{tot}$ des Schmelzguts ist zunächst abhängig von der Verweilzeit des Schmelzguts im Schmelzaggregat. Weiterhin ist die erforderliche Verweilzeit temperaturabhängig. So verläuft beispielsweise das Läutern bei hohen Temperaturen schneller und die Verweilzeit, die erforderlich ist, um das gewünschte Ergebnis, etwa eine geläuterte Schmelze zu erhalten, wird verkürzt.

Die Erfinder haben überraschend erkannt, dass die Erhöhung der Schmelztemperatur und die damit verbundene schnellere Reaktionsgeschwindigkeit in der Schmelze einen mit steigender Temperatur sinkenden Energiebeitrag $E_{tot}$ ergibt, obwohl mehr Energie zur Kühlung der Wände des Schmelzaggregates und zum Aufheizen der Schmelze eingesetzt werden muss.

Die Änderung des Energieverbrauchs pro Gewichtseinheit $E_{tot}$ mit der Temperatur ist gleich der Änderung der Nutzwärme pro Gewichtseinheit $E_N$ mit der Temperatur plus der Änderung des Energieverlustes pro Gewichtseinheit $E_v$ mit der Temperatur.

$$(18) \quad dE_{tot}/dT \quad = \quad dE_n/dT \quad + \quad dE_v/dT$$

Die Änderung der Nutzwärme pro Gewichtseinheit mit der Temperatur $dE_N/dT$ ist für das Aufheizen der Schmelze konstant und definitionsgemäß gleich $c_p$.

Die Nutzwärme pro Gewichtseinheit steigt mit der Temperatur linear an:

$$(19) \quad E_N \; = \; c_p \; * \; \Delta T \; + \; \Delta H$$

$$(20) \quad dE_n/dT \; = \; c_p \; ( \; kWh \; / \; kg*K \; )$$

Das bedeutet, dass zum Erreichen einer höheren Temperatur mehr Nutzwärme pro Gewichtseinheit zum Aufheizen der Schmelze erforderlich ist.

Für die Temperaturabhängigkeit des Energieverlustes pro Gewichtseinheit gilt:

$$(21) \quad E_v \; = \; k \; * \; T \; * \; F_0 \; * \; 1/\rho \; * \; \tau_0 \; * \; e^{+E/T}$$

$$(22) \quad dE_v/dT \; = \; d(k*T)/dT \; * \; F_0 \; * \; 1/\rho \; * \; \tau_0 \; * \; e^{+E/T} \; +$$
$$k \; * \; T \; * \; F_0 \; * \; 1/\rho \; * \; \tau_0 \; * \; d(e^{+E/T})/dT.$$

Die Erfinder haben überraschend gefunden, dass der Wärmedurchgang k zwischen 1700 °C und 2400 °C bei Vorhandensein einer Skullschicht nur linear ansteigt und somit $d(k*T)/dT$ gleich k ist. Somit ergibt sich für $dE_v/dT$:

$$(23) \quad dE_v/dT \; = \; k*F_0*1/\rho*\tau_0*e^{+E/T} \; + \; k*T*F_0*1/\rho*\tau_0*(-E/T^2)*e^{+E/T}$$

Weiterhin haben die Erfinder experimentell herausgefunden, dass $dE_v/dT$ mit steigender Temperatur abnimmt. Die Ursache hierfür ist die starke Zunahme der Reaktionsgeschwindigkeit mit der Temperatur und damit verbunden die starke Abnahme der benötigten, beziehungsweise erforderlichen Verweilzeit τ der Schmelze im Schmelzaggregat.

Der Anstieg von $E_N$ mit der Temperatur und die Abnahme von $E_v$ mit der Temperatur führen dazu, dass bei einer Temperatur $T_{eff}$ ein Optimum erreicht wird, bei welchem der Energieverbrauch pro Gewichtseinheit $E_{tot}$ minimal wird.

$$\Bigg|_{T=T_{eff}} \qquad \Bigg|_{T=T_{eff}} \qquad \Bigg|_{T=T_{eff}}$$

Die Einrichtung zur konduktiven Beheizung der Schmelze umfasst gemäß einer Ausführungsform der Erfindung gekühlte Elektroden. Durch den Einsatz derartiger gekühlter Elektroden kann die Schmelze auf hohe Temperaturen aufgeheizt werden, welche auch die Anwendungsgrenztemperaturen der geeigneten Elektrodenmaterialien überschreiten, so dass eine für einen niedrigen Energieverbrauch günstige Temperatur eingestellt werden kann. Solche Elektroden und Schmelzaggregate zur direkten konduktiven Beheizung von Schmelzen werden auch in den beiden früheren deutschen Anmeldungen mit den Anmeldenummern 102 56 657.7 und 102 56 594.5 beschrieben, deren Offenbarungsgehalt diesbezüglich vollumfänglich auch zum Gegenstand der vorliegenden Anmeldung gemacht wird.

Die vorzugsweise großflächigen Elektroden können mit Vorteil in Aussparungen gekühlter Wände des Aggregats eingesetzt sein.

Die Schmelze kann mit Hilfe der gekühlten Elektroden mit Wechselstrom von 50 Hz bis 50 kHz vorzugsweise von 2 kHz bis 10 kHz beheizt werden. Die Elektrodenflächen können vorteilhaft so groß dimensioniert werden, dass die Stromdichte zur Beheizung der Schmelze an keiner Stelle der Elektroden mehr als 5 A/cm$^2$ aufweist. Gemäß einer bevorzugten Weiterbildung dieser Ausführungsform weisen die Elektroden mindestens einen, vorzugsweise zwei Kühlkreise über die deren Kühlung geregelt werden kann. Als Kühlmedium können vorzugsweise Luft und Wasser dienen.

Ein Schmelzaggregat mit konduktiver Beheizung, beziehungsweise eine Weiterbildung des erfindungsgemäßen Verfahrens mit konduktiver Beheizung sind auch noch für Schmelzen geeignet, deren elektrische Leitfähigkeit kleiner als $10^{-1}$ $\Omega^{-1}$cm$^{-1}$ ist, beispielsweise für Schmelzen mit einer elektrischen Leitfähigkeit im Bereich von $10^{-3}$ $\Omega^{-1}$cm$^{-1}$ beziehungsweise vorzugsweise von $10^{-2}$ $\Omega^{-1}$cm$^{-1}$ bis $10^{-1}$ $\Omega^{-1}$cm$^{-1}$

Um Schmelzen in Schmelzaggregaten mit gekühlten Wänden auf Temperaturen über 1600 °C bis hin zu $T_{eff}$ aufheizen zu können, ist es nötig, dass die gekühlten Elektroden direkt in die gekühlten Wände des Schmelzaggregates eingebaut werden.

Erfindungsgemäß enthalten die großflächigen Elektroden, die ein Bestandteil der gekühlten Wände sind, mindestens ein regelbares Kühlsystem. Vorzugsweise enthalten die Elektroden ein doppeltes regelbares Kühlsystem z.B. eins für eine Gaskühlung und eins für eine Flüssigkeitskühlung.

Die großflächigen gekühlten Elektroden können sowohl in die Wände von Skulltiegeln als auch in gekühlte keramische Wände eingebaut werden.

Es hat sich gezeigt, dass auch bei den Schmelzaggregaten mit gekühlten Wänden, die direkt konduktiv mit Wechselstrom beheizt werden, bei Erhöhung der Schmelztemperatur der Anstieg des Energieeintrages durch die Erhöhung der elektrischen Leitfähigkeit größer ist, als der Anstieg des Wärmeverlustes durch die gekühlten Wände und die Erhöhung der Nutzwärme zu Erhöhung der Schmelztemperatur.

Die Einrichtung zur Hochfrequenzbeheizung der Schmelze in einem Schmelzaggregat mit gekühlten Wänden umfasst gemäß einer Ausführungsform der Erfindung einen Skulltiegel, der mit einer Hochfrequenzspule umgeben ist. Der Skulltiegel wird aus gekühlten Metallrohren gebildet. Zwischen den Metallrohren befinden sich Spalten, wodurch eine direkte Einkopplung der Hochfrequenz in die Glasschmelze möglich ist.

Mit Hochfrequenz beheizte Skulltiegel sind beispielsweise in den Patentschriften DE 199 39 781, DE 199 39 772 , DE 100 02 019, DE 199 39 779, DE 100 41 757 oder DE 199 39.780 beschriebene.

Das Verfahren wird ferner besonders bevorzugt als kontinuierliches Verfahren durchgeführt, wobei der Schmelze mittels entsprechender Einrichtungen kontinuierlich Schmelzgut zugeführt und entnommen wird. Das zugeführte Schmelzgut kann dabei sowohl in fester Form als Gemenge, als auch bereits als Schmelze zugeführt werden. Die Entnahme von Schmelzgut erfolgt vorzugsweise in geschmolzener Form.

Die Erfinder haben erkannt, dass sich die Nachteile, die bei der Temperaturerhöhung bei konventionellen Wannen aufgrund des chemischen Angriffs des Wannenmaterials auftreten, beim Schmelzen in Aggregaten mit gekühlten Wänden vermeiden lassen. Die Wände des Schmelzaggregats müssen soweit abgekühlt werden können, dass keine Korrosion der Wände mehr erfolgt, auch bei sehr hoher Konvektion der Glasschmelze.

Beim Schmelzen in einem Schmelzaggregat mit gekühlten Wänden sind dann der Temperaturerhöhung in bezug auf die Wände kaum Grenzen gesetzt.

Die Erfinder haben weiterhin erkannt, dass es sich, bei Schmelzaggregaten mit gekühlten Wänden lohnt, die Schmelze nicht nur auf die Temperatur $T_{kon}$ ,die für den Einschmelz- oder Läuterprozess gerade nötig ist, zu erhitzen, sondern auf eine deutlich höhere Temperatur, und den Durchsatz entsprechend der kürzeren erforderlichen Verweilzeit zu erhöhen. Gemäß einer Ausführungsform der Erfindung ist dabei vorgesehen, zumindest ein Bereich der Schmelze auf mehr als 1700° C zu erhitzen.

Obwohl der Energieverlust bei einem Tiegel mit gekühlten Wänden, wie beispielsweise bei einem Skulltiegel bei Temperaturerhöhung ansteigt, wurde überraschenderweise gefunden, dass dieser Anstieg bei Erhöhung der Schmelztemperaturen langsamer ist, als der Anstieg der Energie-, beziehungsweise Leistungseinsparung durch Durchsatzerhöhung.

Die chemischen Reaktionen und die physikalischen Prozesse beim Einschmelzen und Läutern weisen vielfach eine exponentielle Abhängigkeit der Prozessgeschwindigkeit von der Temperatur auf, während die Temperaturabhängigkeit der Wärmeabfuhr durch die gekühlten Wände im wesentlichen nur von der Wandoberfläche des Schmelzschmelzaggregates und der Temperaturdifferenz abhängen und mit steigender Temperatur überraschenderweise vergleichsweise langsam anwachsen.

Die Erfinder haben erkannt, dass durch die Temperaturerhöhung der Schmelze über $T_{kon}$ hinaus die physikalischen Prozesse und chemische Reaktionen im Schmelzaggregat so stark beschleunigt werden, dass es möglich ist, den Durchsatz pro Volumeneinheit in einem Schmelzaggregat mit gekühlten Wänden so weit zu erhöhen, dass mit Zunahme der Schmelztemperatur T eine Abnahme des Energieverlustes pro Gewichtseinheit $E_v$ erfolgt, das heißt, dass der Energiegewinn bzw. die Verringerung des Energieverlusts durch die Durchsatzsteigerung deutlich größer ist, als der zusätzlichen Energieverbrauch, der für die Temperaturerhöhung der Schmelze und das Halten der Schmelze im Schmelzaggregat bei der höheren Temperatur benötigt wird.

Durch die Erhöhung des Durchsatzes mit steigender Temperatur, über $T_{kon}$ hinaus, nimmt der Energieverlust pro Gewichtseinheit $E_v$ stetig bis zur Temperatur $T_{eff}$ ab.

Der Energieverbrauch pro Gewichtseinheit $E_{tot}$, also die Summe aus Energieverlust pro Gewichtseinheit $E_v$ insbesondere durch die Wände und den Boden und der Nutzwärme pro Gewichtseinheit $E_N$ zum Aufheizen der Schmelze durchläuft, wie oben bereits erläutert, ein Minimum bei $T_{eff}$, sofern der Durchsatz an die erforderliche Verweilzeit t angepasst wird.

Wird das Minimum zu höheren Temperaturen hin überschritten, so steigt der Energieverbrauch pro Gewichtseinheit $E_{tot}$ als Funktion der Temperatur jedoch nur sehr langsam wieder an, während unterhalb des Minimums bei niedrigeren Temperaturen ein starker Abfall von $E_{tot}$ zu $T_{eff}$ hin als Funktion der Temperatur erfolgt.

Dementsprechend ist der Effekt der Energieeinsparung mit steigender Temperatur im Bereich unterhalb von $T_{eff}$ sehr groß.

Auch oberhalb von $T_{eff}$ kann ein Betrieb eines Aggregates vorteilhaft sein, etwa, um bei, aufgrund des langsamen Anstiegs des Energieverbrauchs in diesem Bereich nur geringfügig erhöhten Energiekosten sehr schnell mit hohem Durchsatz arbeiten zu können. Allerdings ist hierbei auch der apparative Aufwand größer. Daher wird ein Betrieb bei einer Temperatur unterhalb oder bis zu $T_{eff}$, also in einem Bereich von $T_{eff}$ - 20% bis $T_{eff}$ bevorzugt. Auch kann es sein, dass die angestrebte Temperatur $T_{eff}$ nicht erreicht werden kann. Dies hängt unter anderem von der Zusammensetzung der Schmelze ab. Wenn die Schmelze Bestandteile enthält, die unterhalb von $T_{eff}$ bereits beginnen zu verdampfen, dann kann die Schmelze nur bis zur Verdampfungstemperatur $T_{verd}$ des betreffenden Bestandteils der Schmelze erhitzt werden, ohne die gewünschte Zusammensetzung des erschmolzenen Glases stark zu verändern. Ist dann $T_{verd}$ kleiner als $T_{eff}$, so kann nur ein Teil des maximal möglichen Energieeinsparungspotentials verwirklicht werden. Die Temperatur $T_{eff}$ kann auch dann nicht erreicht werden, wenn es nicht möglich ist, dem System genügend Wärmeenergie zuzuführen.

Das Maximum der Energieeinsparung ist in vielen Fällen in erster Näherung bei einer Temperatur erreicht, bei der die Nutzwärme pro Gewichtseinheit $E_N$ zur Erhöhung der Schmelztemperatur gleich dem Energieverlust pro Gewichtseinheit $E_v$ ist.

Gemäß einer Ausführungsform der Erfindung kann daher eine Temperatur kleiner oder gleich dieser Temperatur gewählt werden, bei welcher die Nutzwärme pro Gewichtseinheit und der Energieverlust prp Gewichtseinheit gleich groß sind.

$$( \quad E_N \quad = \quad E_v \quad )$$

Da der Abfall des Energieverlusts pro Gewichtseinheit mit der Temperatur steiler ist als der Anstieg der Nutzwärme pro Gewichtseinheit liegt das Maximum der Energieeinsparung etwas oberhalb der Temperatur bei der die Nutzwärme pro Gewichtseinheit $E_n$ gleich dem Energieverlust pro Gewichtseinheit $E_v$ ist.

Zur Bestimmung der Temperatur $T_{eff}$ werden

- die Nutzwärme pro Gewichtseinheit zum Aufheizen der Schmelze,
- der Energieverlust der Anlage bzw. der Wärmeverlust, durch die Wände und den Boden, sowie
- die Durchsatzsteigerung

in Abhängigkeit von der Temperatur bestimmt.

Die Änderung der Nutzwärme pro Gewichtseinheit zum Aufheizen einer Glasschmelze mit der Temperatur kann, wie bereits erwähnt, aus der spezifischen Wärme $C_p$ der Glasschmelze bestimmt werden.

Die spezifische Wärmekapazität $c_p$ von Glasschmelzen liegt zwischen 1 und 2 kJ /(kg * K), beispielsweise bei 1,175 kJ /(kg * K) für Kalk-Natron-Glas und 1,5 kJ /(kg * K) für ein Alumino-Silicat-Glas zur Herstellung von Glaskeramik.

Die Änderung des Energieverlust der Wand in Abhängigkeit von der Temperatur kann beispielsweise direkt durch Messung der Temperatur der Kühlflüssigkeit, die zur Kühlung der Wände eingesetzt wird, in Abhängigkeit von der Temperatur gemessen werden.

Die Änderung des Durchsatzes mit der Temperatur hängt von der jeweils benötigten Aufenthaltszeit t der Schmelze im Schmelzvolumen ab. Die Änderung des Durchsatzes mit der Temperatur kann entweder experimentell direkt bestimmt werden oder über die Änderung der Reaktionsgeschwindigkeit mit der Temperatur.

Um den relativen Durchsatz von Schmelzgut an die erforderliche Verweilzeit t in der Schmelze anzupassen, kann einerseits der absolute Mengendurchsatz angepasst werden, oder andererseits kann auch ein gewünschter absoluter Mengendurchsatz beibehalten werden und das Schmelzenvolumen bzw. die Abmessungen des Aggregats angepasst werden. Dies ist beispielsweise dann von Vorteil, wenn das Aggregat Teil einer Produktionsstrecke mit vorgegebenem Mengendurchsatz ist.

Aus dem Durchsatz bei der Temperatur $T_{eff}$ lässt sich die Größe des Schmelzaggregates für den vorgegebenen Durchsatz bestimmen.

Erfolgt bei $T_{eff}$ anstelle einer Durchsatzerhöhung eine Verkleinerung des Schmelzaggregates, dann erhöht sich der Energieverlust pro Gewichtseinheit und damit auch der Energieverbrauch pro Gewichtseinheit etwas, da der Flächenfaktor $F_0$ sich etwas erhöht.

Selbstverständlich können auch der absolute Durchsatz und das Aggregat zusammen angepasst werden.

Die Erhöhung des Durchsatzes oder die Verkleinerung der Schmelzaggregate,mit gekühlten Wänden kann jedoch nur so weit erfolgen, dass die Verweilzeit t der Schmelze in dem Schmelzaggregat mit gekühlten Wänden noch ausreichend zur Aufheizung der Schmelze und/oder dem Ablauf der erforderlichen Prozesse, wie etwa dem Blasenauftrieb ist.

Der Energieverbrauch pro Gewichtseinheit $E_{tot}$ bei Schmelzaggregaten mit gekühlten Wänden wird zum einen Teil durch die zusätzliche Nutzwärme pro Gewichtseinheit $E_N$ zum Aufheizen der Schmelze von der Temperatur $T_{kon}$ auf die Temperatur $T_{eff}$ bestimmt. Das bedeutet, dass die Energieeinsparung bei Schmelzaggregaten mit gekühlten Wänden um so größer ist, je niedrigerer die Temperatur $T_{eff}$ liegt.

Dementsprechend ist eine zusätzliche Energieeinsparung möglich, wenn es durch Zusatzmaßnahmen gelingt, die Durchsatzsteigerung pro Temperaturintervall zu erhöhen und damit die Temperatur $T_{eff}$ zu tieferen Temperaturen zu verschieben. Da die Temperatur $T_{eff}$ durch die zeitlich integrierte Kühlleistung beeinflusst wird, ist der Wert von $T_{eff}$ stark von der erforderlichen Verweilzeit beeinflusst, die ihrerseits den relativen Durchsatz bestimmt.

Vorteilhaft kann das erfindungsgemäße Verfahren daher zusätzlich geeignete Maßnahmen zur Verkürzung der erforderlichen Verweilzeit bei vorgegebener Temperatur und Qualität umfassen.

Durch die Verkürzung der erforderlichen Verweilzeit bzw. der Erhöhung des Durchsatzes wird der Energieverlust pro Gewichtseinheit verringert und damit die Temperatur $T_{eff}$ zu tieferen Temperaturen verschoben.

Die Verweilzeit kann unter anderem effektiv verkürzt werden, wenn die Schmelze zusätzlich durchmischt und damit die Reaktionsgeschwindigkeit erhöht wird.

Eine Möglichkeit dazu ist unter anderem darin, eine Konvektionsströmung in der Schmelze anzuregen. Die Erfinder haben erkannt, dass bei der Läuterung von Schmelzen die Durchsatzsteigerung bei Erhöhung der Schmelztemperatur nicht nur von der sehr stark erhöhten Blasenauftriebsgeschwindigkeit abhängt, wie dies beispielsweise in der DE 199 39 779 beschrieben ist, sondern auch von der Verschiebung des thermodynamischen Gleichgewichtes der chemischen Reaktionen und der starken Zunahme der Reaktionskinetik zur Einstellung des thermodynamischen Gleichgewichtes.

Durch die bei dem Heizen mit Hochfrequenz oder Wechselstrom direkte Energieeinstrahlung in die Schmelze und die gekühlten Wände, zum Beispiel den Skullwänden in einem Skulltiegel, herrschen größere Temperaturunterschiede als in einer konventionellen Wanne. Der große Temperaturunterschied sucht sich durch Konvektion auszugleichen.

Weiterhin haben die Erfinder erkannt, dass durch Einstellen einer Viskosität von $< 10^3$ dPas vorzugsweise von $< 10^2$ dPas in zumindest einem Bereich der Schmelze und einer Temperaturdifferenz der Schmelze zwischen einem inneren und einem äußeren Bereich der Schmelze von $> 150$ K vorzugsweise $> 250$ K die erforderliche Verweilzeit deutlich gesenkt werden kann. So nimmt bei diesen Temperatur- und Viskositätsverhältnissen in der Schmelze die Konvektion im Tiegel sehr stark, zu. Dies hat beispielsweise bei der Läuterung zur Folge, dass insbesondere kleine Blasen von der Konvektion mitgerissen werden und somit viel rascher an die Oberfläche gelangen als nur durch den physikalischen Auftrieb.

Außerdem kann bei einer kontinuierlichen Läuterung, wie sie etwa in der DE 100 41 757 offenbart wird, bei der geschmolzenes Schmelzgut von einer Seite eines Tiegels an der Schmelzbadoberfläche in den Tiegel eingeführt und auf einer gegenüberliegenden Seite an der Schmelzbadoberfläche wieder abgeführt werden. Unterstützt durch eine Konvektionsströmung im Tiegel kann so einströmungsprofil erzeugt werden, das dazu führt, dass die ankommende kalte Schmelze auf der einen Seite im Aggregat nach unten fließt, sich dort erwärmt und ohne zu große Verwirbelungen auf der anderen Seite wieder aufsteigt und abfließt. Durch diese Kolbenströmung im Aggregat kann die Läuterung zusätzlich stark beschleunigt und damit der Durchsatz zusätzlich erhöht werden. Die kleinen Blasen werden durch diese Strömung mitgeführt und somit sehr viel rascher an die Oberfläche getragen als es ihrem Auftrieb entspricht.

Eine Verkürzung der erforderlichen Verweilzeit kann unter anderem vorteilhaft auch erreicht werden, wenn die Schmelze mit einem Rührer und/oder durch Bubbling durchgerührt wird. Beim Bubbling wird Gas in die Schmelze mit einer oder mehreren Düsen, insbesondere im Bodenbereich des verwendeten Tiegels eingeführt, wobei das Durchrühren der Schmelze durch das Aufsteigen der Gasblasen erfolgt. Zusätzliches Durchrühren ist unter anderem dann vorteilhaft, wenn die Viskosität der Schmelze über $10^3$ dPas liegt. In diesem Fall reicht die Konvektion der Schmelze im Schmelzaggregat oft nicht aus um Gemenge in die Glasschmelze einzurühren.

In bezug auf die Läuterung hat das erfindungsgemäße Verfahren auch die Vorteile, dass es zum einen bei hohen Schmelztemperaturen zwischen $T_{kon}$ und $T_{eff}$ weniger Energie verbraucht als bei $T_{kon}$ und zum anderen ist es besonders gut geeignet für Hochtemperaturläutermittel.

Die Erfinder haben erkannt, dass durch die Erhöhung der Einschmelztemperatur die chemischen Reaktionen im Schmelzaggregat so beschleunigt werden können, dass es möglich ist, das Gemenge in die Schmelze einzurühren ohne die spätere Qualität des geschmolzenen Materials zu verschlechtern.

Durch das Einführen des Gemenges kann auch ein Auskoppeln der Schmelze nahe der Oberfläche selbst bei großer Gemengezugabe vermieden werden.

Auch beim Einschmelzen von Gemenge kann durch die Erhöhung der Einschmelztemperatur, gegenüber den bei konventionellen Einschmelzverfahren eingesetzten Temperaturen, von $T_{eff}$ - 20% bis $T_{eff}$ + 20% die Aufschmelzgeschwindigkeit des Gemenges und damit der Durchsatz soweit erhöht werden, dass der mit der Temperaturerhöhung verbundene Energieverlust pro Gewichtseinheit deutlich geringer ist, als die Energieeinsparung pro Gewichtseinheit, die durch die erhöhte Aufschmelzgeschwindigkeit des Gemenges und damit erhöhten Durchsatz erzielt wird.

Bei konventionellen Glasschmelzwannen sind der Erhöhung der Einschmelztemperatur noch engere Grenzen gesetzt als beim Läutern. So ist der Wannenangriff des aufschmelzenden Gemenges im allgemeinen größer als der Wannenangriff der Glasschmelze. Um den Wannenangriff im Einschmelzbereich in Grenzen zu halten, darf bei solchen Wannen die Einschmelztemperatur nicht zu hoch gewählt werden. Außerdem muss die Glasschmelze nach dem Einschmelzen meist noch geläutert werden. Zur Läuterung der Glasschmelze muss die Temperatur der Glasschmelze nach dem Einschmelzen erhöht werden, um das Läutermittel frei zu setzen. Auch die höhere Läutertemperatur wird, wie bereits beschrieben, jedoch durch den Wannenangriff begrenzt.

Bei konventionellen Wannen wird das Gemenge meistens in Form eines Gemengeteppichs auf die Glasbadoberfläche aufgelegt und von unten abgeschmolzen. Es herrscht in den konventionellen Wannen nur eine relativ geringe Konvektion. Bei den konventionellen Wannen ist weiterhin ein Unterrühren des Gemenges nicht üblich, da die Gefahr besteht, dass unaufgeschmolzene Gemengebestandteile in das Endprodukt gelangen. Darüber hinaus würde die erhöhte Konvektion, die durch das Rühren im Einschmelzteil hervorgerufen wird, die Wannensteine stark angreifen. Eine hohe Konvektion an der Dreiphasengrenze ist in Verbindung von Gemenge besonders kritisch. Im Gegensatz zu konventionellen Wannen erlaubt das Schmelzen mit gekühlten Wänden eine hohe Konvektion, da sich entweder die Skullschicht beim Skulltiegel ständig erneuert oder die Wände des Schmelzaggregates soweit abgekühlt werden, dass es auch bei hoher Konvektion zu keiner Reaktion zwischen Wand und Schmelze mit Auflösung des Wandmaterials kommt.

Im Gegensatz zu den konventionellen Wannen steht bei Schmelzaggregaten mit gekühlten Wänden, die direkt beheizt werden, einer Temperaturerhöhung zur Beschleunigung des Aufschmelzprozesses nichts im Wege.

Gemäß einer vorteilhaften Weiterbildung der Erfindung kann Schmelzgut auch in Form von Gemenge zugeführt werden, welches auf die Oberfläche der Schmelze aufgelegt wird. Beim Schmelzen in einem Skulltiegel ist der zu erreichende Durchsatz unter anderem abhängig von der Geschwindigkeit, mit der das Gemenge auf die Glasschmelze aufgebracht werden kann und wie schnell das Gemenge unter der Oberfläche abschmilzt.

Beim Einschmelzen von Gemenge in einem Schmelzaggregat mit gekühlten Wänden und direkter Beheizung der Schmelze durch Hochfrequenz oder Wechselstrom muß besonders bei niedrigen Einschmelztemperaturen im allgemeinen darauf geachtet werden, daß das Gemenge nicht zu schnell auf die Oberfläche der Schmelze aufgelegt wird, sonst kann es vorkommen, dass die obere Schicht der Schmelze durch das Gemenge so weit abkühlt, dass die Schmelze in diesem Bereich auskoppelt und so das Abschmelzen deutlich verlangsamt wird.

Durch eine Temperaturerhöhung der Schmelze kann diese Gefahr deutlich verringert werden, so dass ein rascheres Einlegen des Gemenges ohne die Gefahr des Auskoppelns möglich ist.

Auch bei der Verwendung des Schmelzaggregates mit gekühlten Wänden als Einschmelzaggregat, erfolgt durch die Erhöhung der Einschmelztemperatur eine Beschleunigung der chemischen Reaktionen und damit eine Beschleunigung des Aufschmelzens des Gemenges.

Wird das Gemenge, wie bei konventionellen Wannen üblich, nur auf die Oberfläche der Glasschmelze aufgelegt, dann findet ein Aufschmelzen des Gemenges nur an der Grenzschicht zwischen Gemenge und Schmelze statt. Bei Temperaturerhöhung wird eine erhöhte chemische Reaktion vor allem an dieser Grenzschicht zwischen Gemenge und Schmelze wirksam.

Die Energieeinsparung durch die Erhöhung der Aufschmelzgeschwindigkeit bei höherer Temperatur gemäß dieser Weiterbildung der Erfindung ist größer als der Energieverlust durch das Aufheizen und Halten der Glasschmelze bei der höheren Temperatur.

An dieser Stelle sei allerdings darauf hingewiesen, **dass** die Beschleunigung der Aufschmelzgeschwindigkeit durch Temperaturerhöhung auch stark von der Zusammensetzung des Gemenges abhängig ist, da die einzelnen Gemengebestandteile im allgemeinen unterschiedliche Aktivierungsenergien für das Aufschmelzen aufweisen.

Die Erfinder haben aber erkannt, dass die Erhöhung der Aufschmelzgeschwindigkeit mit der Temperatur in der gleichen Größenordnung liegt, wie die Erhöhung der Läutergeschwindigkeit. So hat sich gezeigt, dass ab einer Temperatur, bei der die Viskosität der Schmelze < $10^3$ dPas vorzugsweise < $10^2$ dPas beträgt und die Temperaturdifferenz zwischen einem inneren und einem äußeren Bereich der Schmelze > 150 K vorzugsweise > 250 K beträgt, auch die Aufschmelzgeschwindigkeit bei der Zuführung von Schmelzgut in Form von Gemenge in dem Schmelzaggregat stark ansteigt.

Der sprunghafte Anstieg der Aufschmelzgeschwindigkeit ist, wie oben beschrieben, auf einen starken Anstieg der Konvektionsströmung in der Schmelze zurückzuführen. Durch eine Erhöhung der Temperatur der Schmelze wird zum einen die Viskosität der Schmelze erniedrigt und zum anderen die Temperaturdifferenz zwischen Tiegelrand und Tiegelmitte erzeugt. Die Temperaturdifferenz zwischen Tiegelrand und Tiegelmitte ist auch stark von der Strahlungstransmission der Schmelze zum Beispiel in der Glasschmelze abhängig. Die Temperaturdifferenz ist bei dunklen Gläsern höher als bei hoch transparenten Gläsern. Je größer die Temperaturdifferenz in der Schmelze ist, um so größer ist das Bestreben die Differenz auszugleichen. Sinkt die Viskosität der Schmelze auf $< 10^3$ dPas vorzugsweise auf $< 10^2$ dPas ab, dann setzt eine starke Konvektion in der Schmelze ein. Insbesondere bei dunklen Gläsern reicht zum Beispiel in den meisten Fällen bereits eine Absenkung der Viskosität auf $< 10^3$ dPas aus, während bei hoch transparenten Gläsern die starke Konvektion oft erst bei einer Viskosität der Glasschmelze von $< 10^2$ dPas einsetzt. Als Ursache hierfür wird die größere Temperaturdifferenz, die sich bei den dunklen Gläsern bei gleicher Temperatur der Glasschmelze aufbaut, gesehen.

Die deutliche Erhöhung der Konvektion bedingt eine deutlich bessere Durchmischung der Grenzschicht zwischen Gemenge und Glasschmelze und bewirkt so ein schnelleres Aufschmelzen des Gemenges. Durch die hohe Konvektion kann es bereits zu einem Durchmischen der Schmelze mit dem Gemenge kommen.

Weiterhin haben die Erfinder erkannt, dass durch die bei höheren Temperaturen erhöhte Konvektion, auch die Scherkräfte an dem zu lösenden Gemenge deutlich erhöht werden und daher ebenfalls zu einem deutlich schnelleren Aufschmelzen des Gemenges führt.

Wie bereits beim Läutern der Schmelze beschrieben, entstehen beim Heizen von Schmelzaggregaten mit gekühlten Wänden mit Hochfrequenz oder Wechselstrom durch die direkte Energieeinstrahlung in die Schmelze große Temperaturunterschiede, die zu einer starken Konvektion.in der Schmelze führen können. Diese Konvektion im Schmelzaggregat mit gekühlten Wänden beschleunigt das Abschmelzen des Gemenges noch zusätzlich und führt so zu einer Verkürzung der erforderlichen Verweilzeit und damit bei Anpassung des Durchsatzes zu einer weiteren Verringerung des Energieverbrauchs pro Gewichtseinheit des Schmelzguts.

Das Gemenge kann auch vorteilhaft in die Schmelze eingerührt werden, um die erforderliche Verweilzeit weiter zu verkürzen. Das Einrühren des Gemenges kann dabei ebenfalls wie das oben beschriebene Durchrühren der Schmelze mittels eines Rührers oder durch Bubbling erfolgen. Durch das Einrühren des Gemenges in die Schmelze steht dem Gemenge beim so erreichten "Volumenabschmelzen" eine wesentlich größere Aufschmelzfläche zur Verfügung als beim Abschmelzen an der Oberfläche.

Die Erfinder haben weiterhin erkannt, dass die Aufschmelzgeschwindigkeit auch gesteigert werden kann, wenn das Gemenge nicht in Pulverform auf die Oberfläche der Schmelze aufgelegt wird, sondern der Schmelze in Form von Pellets zugegeben wird, wobei die Pellets entweder durch Rühren, Bubbling oder hohe Konvektion in die Schmelze eingerührt werden.

Auch bei konventionellen Glasschmelzwannen wurden Versuche unternommen das Gemenge nicht in Pulverform, sondern als vorgefertigte Pellets auf die Glasschmelze aufzulegen und abzuschmelzen. Ein Vorteil der Pellets wird dort darin gesehen, daß die Pellets mit der heißen Luft aus der Schmelzwanne vorgewärmt werden können und dadurch Energie eingespart wird. In der Praxis hat sich die Eingabe des Gemenges in Form von Pellets bei konventionellen Wannen aber nicht durchgesetzt, da der Aufwand zur Herstellung der Pellets etwa ebenso hoch ist, wie die zu erwartenden Energieeinsparung durch das Vorwärmen der Pellets. Zudem ergibt sich keine deutliche Steigerung des Durchsatzes durch den Einsatz von Pellets bei konventionellen Wannen.

Als weiteren Vorteil der Pellets wird die geringere Verstaubung des Gemenges angesehen. Bei den meisten technischen Gläsern stellt die Verstaubung des Gemenges jedoch kein großes Problem dar, so daß sich hierfür ein Pelletieren des Gemenges nicht lohnt.

Auch beim Schmelzen von optischen Gläsern hat sich das Pelletieren des Gemenges bisher von einigen Ausnahmen abgesehen nicht durchgesetzt. Bei Gläsern, die sehr stark zur Verstaubung neigen, kann es sinnvoll sein, trotz des höheren Aufwandes das Gemenge in Form Pellets auf die Glasschmelze aufzugeben.

Die Erfinder haben aber festgestellt, daß unter vorteilhafter Weiterbildung des erfindungsgemäßen Verfahrens beim Einschmelzen des Gemenges in einem Schmelzaggregat mit gekühlten Wänden die Aufschmelzgeschwindigkeit durch die Zugabe des Gemenges in Form von Pellets ganz erheblich gesteigert werden kann.

Durch Einführen von Pellets kann die erhöhte chemische Reaktionsgeschwindigkeit, die durch die Temperaturerhöhung bedingt ist, deutlich besser umgesetzt werden. Durch das Einrühren des Gemenges in Form von Pellets wird das Gemenge in der Schmelze sofort von Schmelze umgeben und die chemischen Reaktionen können sofort starten. In Verbindung mit einer Konvektionsströmung kann vorteilhaft sichergestellt werden, daß die Pellets ständig mit neuer Schmelze in Berührung kommen.

Durch die erhöhte chemische Reaktionsgeschwindigkeit bei der erhöhten Schmelztemperatur wird so erreicht, dass die Pellets im Einschmelzaggregat mit der intensiven Durchmischung vollständig aufschmelzen.

Bei der schnellen Einlage des Gemenges, die mit dem mittels des erfindungsgemäßen Verfahren möglichen hohen Durchsatz erreichbar ist, spielt die Verstaubung des Gemenges auch eine größere Bedeutung als bei einer langsamen Einlage, wie sie sonst bei konventionellen Wannen üblich ist.

Eine Verstaubung des Gemenges ist beim direkten Beheizen der Schmelze mit Hochfrequenz oder Wechselstrom zu vermeiden, ist auch deshalb von Vorteil, da die Verstaubungs- und Verdampfungsprodukte sich auf den gekühlten Wänden ablagern und kondensieren können und somit leicht zu elektrischen Überschlägen führen.

Die Erfinder haben außerdem erkannt, dass bei der Verwendung von Aggregaten mit gekühlten Wänden, wie etwa von Skulltiegeln der Wärmeverlust über die gekühlten Wände neben der Temperatur der Schmelze auch von der Art und Dicke der Skullschicht abhängt. Bei der Ausbildung einer kristallinen Schicht ist der Wärmeverlust deutlich geringer als bei transparenten Glasschichten.

Weiterhin haben die Erfinder erkannt, dass bei Gläsern mit hoher Wärmestrahlungstransmission der Energieverlust größer ist als bei Gläsern mit einer geringen Wärmestrahlungstransmission. Der Energieverlust ist z.B. bei Farbgläser geringer als bei transparenten Gläsern.

Erfindungsgemäß hat es sich als vorteilhaft erwiesen, insbesondere bei Schmelzen mit hoher Wärmestrahlungstransmission und/oder glasigen transparenten Skullschichten, wenn die gekühlten Wände, beispielsweise die wassergekühlten Metallrohre eines Skulltiegels eine wärmestrahlungsreflektierende Oberfläche aufweisen. Dabei ist es unerheblich, ob die Wände direkt wärmereflektierend sind oder ob sie eine wärmereflektierende Schicht oder Beschichtung aufweisen.

Gläser und Glasprodukte, können vorzugsweise mit dem erfindungsgemäßen Verfahren hergestellt werden. Derart hergestellte Gläser oder Glasprodukte zeichnen sich dadurch aus, dass das Verhältnis von $Sn^{2+}$ zu $Sn_T$, wobei T die Gesamtkonzentration bezeichnet, zwischen 0.20 bis 0.70, bevorzugt zwischen 0.25 und 0.60 und besonders bevorzugt zwischen 0.30 und 0.50 liegt.

Die Erfinder haben herausgefunden, dass Gläser oder Glasprodukte deren $Sn^{2+}/Sn_T$ - Verhältnis einen Wert von größer als 0.25, bevorzugt größer als 0.35, besonders bevorzugt größer als 0.45 aufweisen, sich durch besonders gute Eigenschaften auszeichnen.

Die Erfindung wird nachfolgend anhand von Beispielen und unter Bezugnahme auf die beigefügten Zeichnungen weiter erläutert.

Es zeigen:

Fig. 1A bis 1C    verschiedene Ansichten einer Ausführungsform einer Vorrichtung mit konduktiver Beheizung der Schmelze,

Fig. 2    eine Ansicht einer weiteren Ausführungsform der Vorrichtung mit induktiver Beheizung der Schmelze,

Fig. 3    ein Diagramm, in dem die Temperatur und der Sauerstoffpartialdruck, $p_{O2}$ einer Schmelze gegen die Zeit aufgetragen sind,

Fig. 4    ein Diagramm, bei welchem der Wärmestrom durch die Skullwand in $W/cm^2$ als Funktion der Temperatur der Schmelze aufgetragen ist,

Fig. 5    ein Diagramm, bei welchem der Flächenfaktor $F_0$ gegen das Schmelzvolumen V aufgetragen ist,

Fig. 6    ein Diagramm, bei welchem die Energie pro Tonne für den Energieverlust durch die Wände eines Schmelzaggregats, die Nutzwärme und den gesamten Energieverbrauch als Funktion der Schmelztemperatur aufgetragen sind,

Fig. 7    anhand eines Diagramms den Einfluss zusätzlicher Maßnahmen zur Durchsatzsteigerung auf die Absenkung der Temperatur $T_{eff}$, und

Fig. 8    ein Diagramm der Reaktionsrate k für die Auflösung von $SiO_2$ als Funktion der Temperatur der Schmelze.

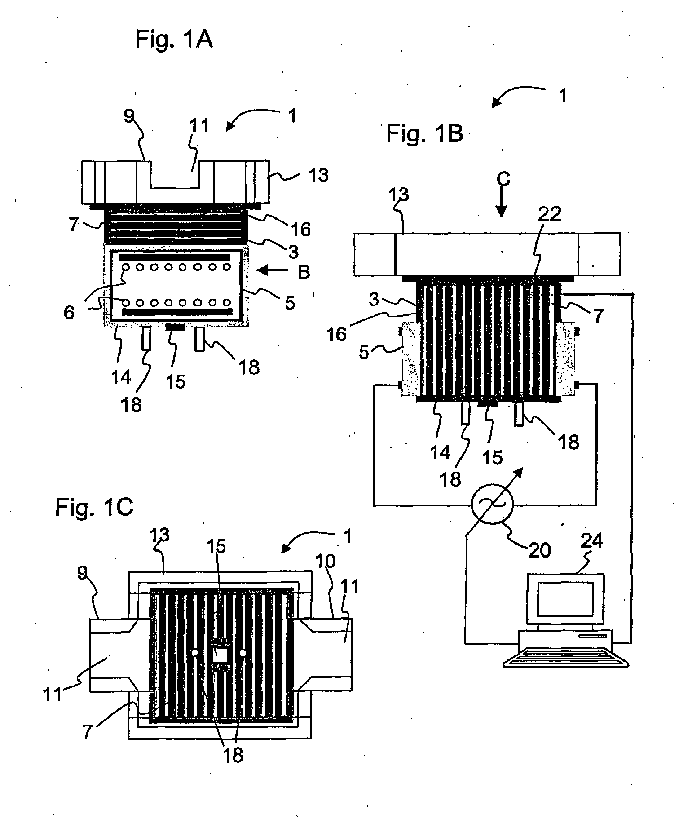

In den Figuren 1A bis 1C sind verschiedene Ansichten einer ersten Ausführungsform einer Vorrichtung zum Schmelzen anorganischer Materialien dargestellt. Die Vorrichtung ist als Ganzes mit 1 bezeichnet. Fig. 1B zeigt eine Ansicht der Vorrichtung 1 aus Sicht des Pfeils B in Fig. 1A. Fig. 1C stellt eine Aufsicht gesehen in Richtung des Pfeils C in Fig. 1B dar. Die Vorrichtung 1 umfasst ein als Skulltiegel ausgeführtes Schmelzgefäß 3. Der Tiegel ist aus Rohren 7 gefertigt, durch die im Betrieb der Vorrichtung zur Kühlung des Gefäßes Kühlmittel geleitet wird. Als Material für die Rohre ist unter anderem Kupfer aufgrund seiner guten Wärmeleitfähigkeit geeignet. Kupfer weist jedoch andererseits keine besonders hohe Festigkeit auf, so dass auch Rohre aus hoch mechanisch oder temperaturfestem Metall, insbesondere solche aus,hochfestem oder warmfestem Stahl geeignet sein können.

Um den Wärmeverlust über die Skullwände zu minimieren, können die Wände, also bei dieser Ausführungsform der Vorrichtung die Rohre des Skulltiegels außerdem mit einer wärmestrahlungs-reflektierenden Oberfläche ausgestattet sein. Beispielsweise können dazu die Rohre 7 mit einer Platin- oder Goldbeschichtung versehen sein, die insbesondere auch poliert sein kann, um das Reflexionsvermögen zu erhöhen. Auch Rhodium, Chrom, Nickel oder Palladium, sowie deren Legierungen können dazu eingesetzt werden.

Um Reaktionen an der Dreiphasengrenze zu unterdrücken, die am Rand der Schmelzbadoberfläche zur Oberofenatmosphäre entstehen, ist am Tiegel im Bereich der Schmelzbadoberfläche ein Feuerfestkragen 13 angeordnet. Der Kragen ragt seitlich über den Tiegelrand hinaus. Der Boden des Kragens ist außerdem gekühlt. Am Rand wird der Kragen 13 durch eine Feuerfest-Keramikwand abgeschlossen.

In den Feuerfestkragen ist ein Zulauf 9 und ein Ablauf 10 mit Schmelzgutrinnen 11 eingearbeitet, wobei der Zulauf als Einrichtung zur kontinuierlichen Zuführung von Schmelzgut und der Ablauf als Einrichtung zur kontinuierlichen Entnahme von Schmelzgut dient, wobei durch den Zulauf und Ablauf im Bereich der Schmelzbadoberfläche des Schmelzgefäßes kontinuierlich Schmelzgut zu- und abgeführt wird. Am Boden 14 des Schmelzgefäßes ist außerdem ein Bodenablauf 15 angeordnet, durch welchen der Tiegel entleert werden kann. Anders als in der in Fig. 1 gezeigten Ausführungsform können die Skullrohre auch aus der Schmelzbadoberfläche herausragen und zumindest im Bereich der Schmelzbadoberfläche zur Erhöhung der chemischen Resistenz beispielsweise kunststoffbeschichtet sein. Als Kunststoff ist dazu insbesondere Teflon geeignet.

An der Seitenwandung dieser Ausführungsform der Vorrichtung 1 sind in entsprechenden Aussparungen in der Seitenwandung .16 des Schmelzgefäßes zwei Elektroden 5 als Einrichtung zur konduktiven Beheizung der Schmelze angeordnet. Die Elektroden weisen Kühlmittelanschlüsse 6 als Bestandteil einer Einrichtung zur Kühlung der Elektroden auf, über welche Kühlmittel durch Kanäle im Inneren der Elektroden geleitet wird. Die Elektroden 5 ersetzen einen Teil der Seitenwandung 16 des Schmelzgefäßes 3, wobei die Elektroden 5 außerdem gegenüberliegend am Schmelzgefäß angebracht sind. Um die Stromdichte im Schmelzkontaktmaterial der Elektroden gering zu halten, sind die Elektroden 5 großflächig gehalten. Bevorzugt ersetzen die Elektroden 5 dabei mindestens 15 % der Wandungsfläche des Schmelzgefäßes im Bereich der Schmelze.

Zum Heizen der Schmelze wird über die Elektroden 5 ein Heizstrom durch die Schmelze geschickt, wobei die Elektroden 5 gegenüber dem Schmelzgefäß 3 isoliert befestigt sind, so dass kein Strom über die Wandungen des Schmelzgefäßes fließen und die Heizleistung mindern kann. Um im Falle eines Defektes der Isolierung dennoch die Kurzschlussfestigkeit zu erhalten, können außerdem auch die Wandelemente des Schmelzgefäßes in zueinander isolierte Segmente aufgeteilt sein. Die Elektroden sind ferner auf denselben Seiten der Vorrichtung 1 wie Zulauf 9 und Ablauf 10 der Schmelze angeordnet, so dass der Heizstrom zwischen den Elektroden im wesentlichen in Richtung der Hauptfließrichtung der Schmelze oder entgegengesetzt fließt. ,

Die Elektroden sind großflächig dimensioniert, so dass der aus den Elektroden in die Schmelze austretende Strom an keiner Stelle der Schmelzkontaktfläche eine Stromdichte von 5 A/cm2 überschreitet. Über die Elektroden 5 wird durch die im Schmelzgefäß 3 befindliche Schmelze mittels einer Einrichtung zur Erzeugung von Wechselstrom ein Heizstrom, bevorzugt mit einer Wechselstromfrequenz in einem Bereich von 50 Hz bis 50 kHz, besonders bevorzugt mit einer Wechselstromfrequenz in einem Bereich von 2 kHz bis 10 kHz geleitet.

Im Boden 14 des Tiegels sind außerdem Düsen 18 angeordnet, mit welchen Bubbling-Gas in die Schmelze eingeblasen werden kann, um die Schmelze zusätzlich durchzurühren.

Fig. 1B zeigt zusätzlich schematisch eine Stromversorgung 20, welche die Elektroden 5 mit dem Heizstrom für die Schmelze versorgt. Die Stromversorgung 20 ist regelbar ausgestaltet, wobei die Regelung mittels einer programmgesteuerten Recheneinrichtung 24 erfolgt. Mit der Recheneinrichtung 24 werden Temperaturmesswerte eines oder mehrerer Temperaturfühler 22 erfasst und die Heizstromleistung der Stromversorgung geregelt. Die Recheneinrichtung dient in Zusammenhang mit den Temperaturfühlern 20 als Einrichtung zur Einstellung einer geeigneten Temperatur in der Schmelze, die zumindest $T_{eff}$ - 20% bis $T_{eff}$ + 20% beträgt, um einen energiesparenden Betrieb zu ermöglichen.

Außerdem kann mit der Recheneinrichtung 20, die über geeignete Schnittstellen an eine steuerbare Einrichtung zur Förderung von Schmelzgut auch der Durchsatz angepasst werden, so dass die erforderlichen mittlere Verweilzeit im Aggregat nicht unterschritten wird. Die Recheneinrichtung kann daher vorteilhaft auch als Bestandteil einer Einrichtung zur Anpassung des relativen Durchsatzes von Schmelzgut an die erforderliche Verweilzeit in der Schmelze fungieren.

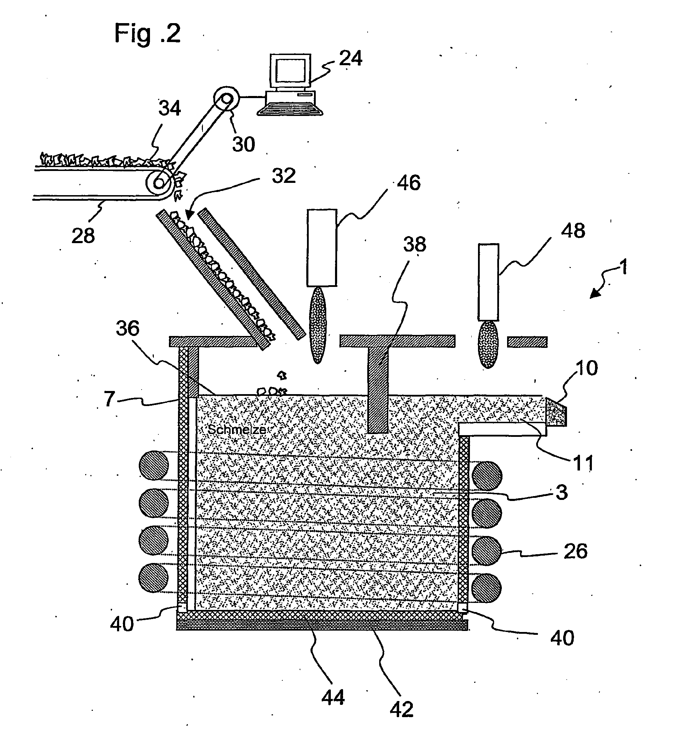

Fig. 2 zeigt eine weitere Ausführungsform einer Vorrichtung 1. Auch diese Ausführungsform umfasst ein als Skulltiegel ausgeführtes Schmelzgefäß 3 mit Metallrohren 7. Die Metallrohre 7 sind an einer Bodenplatte über eine elektrische Isolierung 40 befestigt. Die Bodenplatte dieser Ausführungsform einer Vorrichtung 1 umfaßt eine erste Bodenplatte 44, auf der eine gekühlte, quarzalgeschlickerte zweite Bodenplatte 44 angeordnet ist, so daß auch im Bodenbereich gekühlte Wände vorhanden sind. Dementsprechend sind alle Wandbestandteile, die mit der Schmelze in Kontakt sind, gekühlt, so daß ein Aufheizen zumindest eines Bereiches der Schmelze über die Anwendungsgrenztemperatur der Materialien dieser Wandbestandteile möglich ist.

Diese Ausführungsform der Vorrichtung 1 weist zur Beheizung der Schmelze im Schmelzgefäß 3 eine Einrichtung zur induktiven Beheizung auf. Diese Einrichtung umfasst eine Induktionsspule 26, welche das Schmelzgefäß, beziehungsweise die im Schmelzgefäß vorhandene Schmelze umgibt. Ebenso wie die anhand der Figuren 1A bis 1C erläuterte Ausführungsform ist ein Ablauf 10 mit Ablaufrinne 11 als Einrichtung zur kontinuierlichen Entnahme von Schmelzgut vorgesehen.

Die Vorrichtung 1 weist außerdem eine Einrichtung zur kontinuierlichen Zuführung von Schmelzgut auf. Diese umfaßt bei der anhand von Fig. 2 gezeigten Ausführungsform ein Förderband 28, mit welchem Schmelzgut in Form von Gemenge und/oder Scherben 34 durch eine Einlegeöffnung 32 zugeführt und auf die Schmelzbadoberfläche aufgelegt wird. Ein Wall 38 verhindert, daß nicht aufgeschmolzenes, auf der Schmelzbadoberfläche aufschminnendes Schmelzgut direkt zum Ablauf 10 gelangen kann und hilft so, die erforderliche Verweilzeit von Schmelzgut im Schmelzgefäß 3 einzuhalten.

Die Geschwindigkeit der Gemengeeinlage und damit der Durchsatz oder der relative Durchsatz sind durch die Fördergeschwindigkeit des Förderbandes 28 einstell- oder steuerbar. Die Steuerung erfolgt dabei über eine programmgesteuerte Recheneinrichtung 24. Die Recheneinrichtung 24 in Verbindung mit den steuerbaren Antrieb 30 erlaubt eine Anpassung der Einlagegeschwindigkeit von Schmelzgut und damit auch des Durchsatzes der Vorrichtung 1. Das Förderband in Verbindung mit dem durch eine Recheneinrichtung 24 gesteuerten Antrieb 30 stellen somit auch eine Einrichtung zur Anpassung des relativen Durchsatzes an die erforderliche Verweilzeit von Schmelzgut im Schmelzaggregat, beziehungsweise im Tiegel 3 dar.

Bevorzugt wird dabei auch die Leistung der Induktionsspule 26 von der Recheneinrichtung in ähnlicher Weise wie die Stromleistung bei der konduktiven Beheizung der anhand der Fig. 1B gezeigten Ausführungsform unter Auswertung der Schmelzentemperatur gesteuert, um die Schmelzentemperatur in einem Bereich von $T_{eff}$-20% bis $T_{eff}$+20% einzuregeln.

Zusätzlich sind ein Wannenbrenner 46 und ein oberhalb der Auslaufrinne 11 angeordneter Überlaufbrenner 48 angeordnet. Mit Hilfe dieser Brenner kann insbesondere zum Anfahren der Vorrichtung 1 Schmelzgut aufgeschmolzen werden, so daß das aufgeschmolzene Schmelzgut an das Hochfrequenzfeld der Spule 26 ankoppelt.

Im folgenden wird die Erfindung anhand von Beispielen näher erläutert.

Beispiel 1:

Energieeinsparung beim Läutern

Durch die Erhöhung der Schmelztemperatur erfolgt sowohl eine Verschiebung des thermodynamischen Gleichgewichtes als auch eine Erniedrigung der Viskosität. Die Erniedrigung der Viskosität hat eine Erhöhung der Blasenaufstiegsgeschwindigkeit, sowie eine Erhöhung der Diffusionsgeschwindigkeit der Gase in der Schmelze zur Folge.

Es wurde beispielsweise bei einer $Li_2O$-$Al_2O_3$-$SiO_2$ Glaskeramikschmelze experimentell ermittelt, dass durch eine Temperaturerhöhung von 1700°C auf 1900°C der Durchsatz in einem Läuteraggregat ohne Einbuße an Qualität um mindestens den Faktor 5 gesteigert werden kann.

Durch die Temperaturerhöhung erfolgt eine Viskositätserniedrigung der Schmelze und damit verbunden eine Erhöhung der Blasenauftriebsgeschwindigkeit um den Faktor 5.

Weiterhin baut sich bei der Redoxläuterung bei rascher Temperaturerhöhung in der Schmelze ein $O_2$-Überdruck auf, der sich bei niedrigen Schmelztemperaturen erst allmählich durch Blasenbildung und Blasenaustrag wieder abbaut.

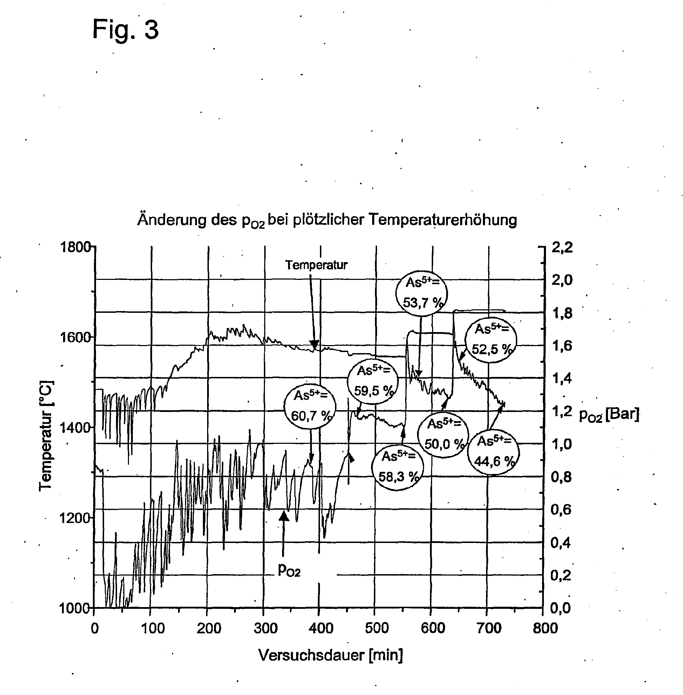

Die Fig. 3 zeigt dazu ein Diagramm, in dem die Temperatur (links) und der Sauerstoffpartialsdruck, $pO_2$ (rechts) einer Schmelze gegen die Versuchsdauer aufgetragen sind.

Bei dem Versuch zu Fig. 3 wurde ein Gemenge mit einem $As_2O_3$ - Läutermittel bei 1550°C eingeschmolzen und nacheinander auf 1600°C und 1650°C aufgeheizt. Bei jeder Temperaturerhöhung nimmt zunächst der $P_{o2}$ - Wert sehr rasch zu, um dann allmählich abzufallen. Mit steigender Temperatur nimmt auch der $As_2O_5$ - Gehalt ab. Die Abnahme des $pO_2$ - Wertes ist um so schneller, je höher die Schmelztemperatur ist.

Durch die starke Temperaturerhöhung verschiebt sich beim Läutern zum einen das Redoxgleichgewicht stark zu Gunsten der $O_2$ -Bildung, dadurch wird der $pO_2$ -Druck in der Schmelze stark erhöht, was zur Bildung neuer bzw. größerer Blasen beiträgt. Zum anderen erhöht sich auch die Diffusionsgeschwindigkeit des Sauerstoffs in der Schmelze, was zu einer Beschleunigung der Diffusion des Sauerstoffs in schon vorhandene Blasen führt.

Neben der Verringerung des Energieverlustes hat das erfindungsgemäße Verfahren noch den Vorteil, dass die beispielsweise in der DE 199 39 779 beschriebenen Hochtemperaturläutermittel eingesetzt werden können.

So kann bei Läutertemperaturen über 1700°C besonders vorteilhaft $SnO_2$ eingesetzt werden. Das Zinnoxid, $SnO_2$, gibt die Hauptmenge an Sauerstoff erst oberhalb von etwa 1700 °C ab.

In der Arbeit von N.Shimatani "Fining methods without arsenic oxide for $Li_2O$-$Al_2O_3$-$SiO_2$ glass-ceramic" wird ein Verhältnis $Sn^{2+}/Sn_T$ von 0.05 bei 1450°C; 0.1 bei 1525°C und 0.15 bei 1600°C angegeben. Der Index "T" bezeichnet dabei die Gesamtkonzentration.

Eigene Versuche an einem Display-Glas haben Werte von $Sn^{2+}/Sn_T$ von 0.18 bei 1600°C, 0.21 bei 1650°C und 0.24 bei 1700°C ergeben. Das $Sn^{2+}/Sn_T$ - Verhältnis ist außerdem etwas von der Glaszusammensetzung abhängig. Bei hohen Viskositäten der Glasschmelze spielt auch die Zeit zur Einstellung des thermodynamischen Gleichgewichtes eine entscheidende Rolle. Dies erklärt die leicht unterschiedlichen Werte bei relativ ähnlichen Glaszusammensetzungen.

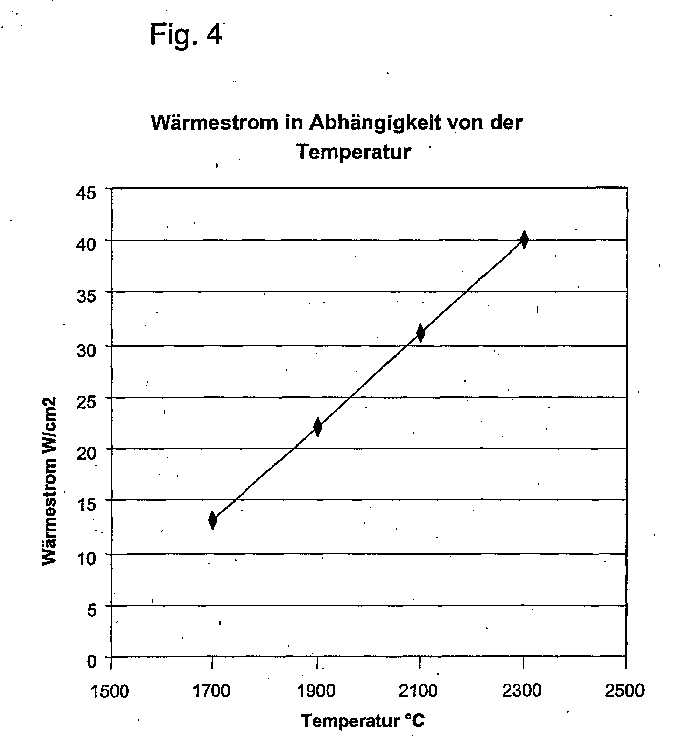

Fig. 4 zeigt nochmals zur Verdeutlichung den $Sn^{2+}$ Gehalt in Abhängigkeit von der Temperatur bei Aluminosilicatgläsern, welche nach 1 bis 4 Stunden Schmelzen bei entsprechender Temperatur hergestellt worden sind. Aufgetragen ist der Anteil von $Sn^{2+}$ in Prozent des Gesamtanteils $Sn_T$.

Zu erkennen ist, dass der Anteil an $Sn^{2+}$ mit steigender Temperatur zunimmt. Es wird deutlich, dass mit steigender Temperatur mehr $Sn^{4+}$ in $Sn^{2+}$ umgesetzt wird. Läutertemperaturen über 1700°C sind somit vorteilhaft, da hier das Zinnoxid wesentliche Anteile, wenn nicht sogar die Hauptmenge an Sauerstoff abgibt. An dem $Sn^{2+}/Sn^{4+}$-Verhältnis lässt sich unter sonst gleichen Versuchsbedingungen und Glaszusammensetzungen erkennen, wie hoch die Läutertemperatur der Glasschmelze war.

Glas welches derart hergestellt wurde, zeigt also ein temperaturabhängiges Verhältnis von $Sn^{2+}$ zu $Sn_T$. Für dieses Verhältnis von $Sn^{2+}$ zu $Sn_T$ zeigt Fig. 4 Gläser mit einem Wert von größer als 0.25, bevorzugt werden jedoch Gläser mit einem Wert, welcher größer als 0.35 ist, und besonders bevorzugt werden Gläser mit einem derartigen Wert, welcher größer als 0.45 ist.

Aus derartigen Gläsern hergestellte Glasprodukte weisen in der Regel dann die gleichen Verhältnisse von $Sn^{2+}$ zu $Sn_T$ auf, falls nicht wesentliche Hochtemperaturprozesse durchgeführt wurden, welche ähnliche Temperaturen, wie die vorstehend besprochenen erreichen.

Das Läutern bei hohen Schmelztemperaturen (über 1650 °C) mit Hochtemperatur-Redox-Läutermitteln hat den zusätzlichen Vorteil, dass bei tieferen Temperaturen um 1400°C bis 1500°C die Bildung von Blasen an Platin stark unterdrückt wird. Platin ist insbesondere als Schmelzkontaktmaterial für die Elektroden bei konduktiver Beheizung geeignet. Die Hochtemperatur-Redox-Läutermittel nehmen bei diesen niedrigen Temperaturen den Saustoff wieder auf, der bei der Wasserstoffdiffusion durch das Platin entsteht.

Die Erfinder haben überraschend festgestellt, dass der Energieverlust durch die wassergekühlten Wände eines Skulltiegels zwischen 1700°C und 2400°C nicht, wie man zunächst erwarten würde, exponentiell ansteigt, sondern nur linear

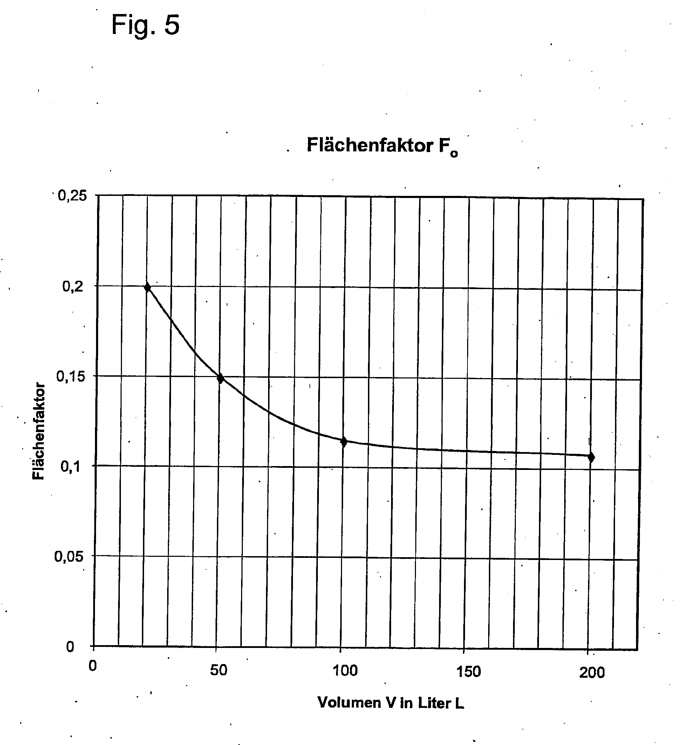

Fig. 5 zeigt dazu ein Diagramm, bei welchem die Wärmestromdichte j durch die, Skullwand in $W/cm^2$ gegen die Temperatur der Schmelze aufgetragen ist. Die Wärmestromdichte durch die Wände eines Skulltiegels wurde bei einer $Li_2O$-$Al_2O_3$-$SiO_2$ - Glaskeramikschmelze in Abhängigkeit von der Temperatur oberhalb 1650 °C gemessen. Die Messwerte sind in nachstehender Tabelle aufgelistet:

$$T = 1700\ °C \quad j = 13\ W / cm^2$$
$$T = 1900\ °C \quad j = 22\ W / cm^2$$
$$T = 2100\ °C \quad j = 31\ W / cm^2$$
$$T = 2300\ °C \quad j = 40\ W / cm^2$$

Die im Diagramm der Fig. 5 aufgetragenen Messwerte zeigen deutlich, dass der Wärmestrom durch die Skullwand in dem gemessenen Temperaturbereich nur linear ansteigt.

Die Erfinder haben gefunden, dass beispielsweise beim Aufheizen der Glasschmelze einer $Li_2O$-$Al_2O_3$-$SiO_2$ Glaskeramik von 1700 °C auf 1900 °C und Läutern der Glasschmelze bei 1900 °C und einer Durchsatzsteigerung um den Faktor 5 in einem 100 Liter Skulltiegel der Energiebedarf pro Gewichtseinheit $E_{tot}$, einschließlich dem stärkeren Energieverlust durch die wassergekühlten Metallrohre des Skulltiegels und der zusätzlichen Nutzwärme zum weiteren Aufheizen der Schmelze um mindestens den Faktor 2,5 verringert wird.

Experiment zum Läutern bei konstantem Schmelzvolumen

An einem konventionellen keramischen Einschmelzaggregat ist ein 100 Liter Skull-Läutertiegel angeschlossen. In einem kontinuierlichen Prozess werden in dem 100 Liter Skulltiegel 1000 kg Glasschmelze pro Tag geläutert. Der Skulltiegel weist bei 1700 °C einen Energieverlust von 153 kW über die wassergekühlten Metallrohre auf. Dies ergibt einen Wärmeverlust von 3672 kWh/d oder bei einem Durchsatz von 1000 kg/d einen Energieverlust pro Gewichtseinheit von 3,67 kWh/kg.

Die Glasschmelze wird anschließend in dem Skulltiegel von 1700°C auf 1900 °C erhitzt.

Um 1000kg Glasschmelze von 1700°C auf 1900°C zu erhitzen, werden etwa 300000 kJ oder 83,4 kWh Nutzwärme benötigt (bei einer Nutzwärme von 1,5 kJ/(kg * K)). Durch die Temperaturerhöhung von 1700°C auf 1900°C erhöht sich der Energieverlust im 100 Liter Skulltiegel von 153 kW auf etwa 258 kW, beziehungsweise von 3672 kWh/d auf 6192 kWh/d.

Für die Läuterung von 1000 kg Glasschmelze in einem 100 Liter Skulltiegel bei 1900°C werden 83,4 + ( 6192 - 3672 ) = 2603 kWh bzw. 2,6 kWh/kg mehr benötigt als bei 1700°C.

Durch die Beschleunigung der Einstellung des thermodynamischen Gleichgewichtes und der Erhöhung Blasenaufstiegsgeschwindigkeit bei 1900 °C um mindestens den Faktor 5 gegenüber 1700 °C ist jedoch eine Durchsatzsteigerung von 1000 kg/d bei 1700°C auf 5000 kg/d bei 1900°C, beziehungsweise eine Verkürzung der erforderlichen Verweilzeit t um den Faktor 5 möglich, ohne dass eine Verschlechterung der Glasqualität eintritt.

Zum Läutern der 5000kg bei 1900 °C werden dann insgesamt 417 kWh + 6192 kWh = 6609 kWh benötigt, wobei die 417 kWh die Nutzwärme für die 5000 kg mit je 83,4 kWh pro.1000 kg sind. Damit erniedrigte sich der Energieverlust pro Gewichtseinheit $E_v$ von :

3,67 kWh/kg bei 1700 °C auf
6609 kWh / 5000 kg = 1,32 kWh/kg bei 1900 °C.

Durch die Erhöhung der Temperatur der Glasschmelze um nur 200 °C konnte so der Energieverbrauch pro Gewichtseinheit $E_{tot}$ um den Faktor 3,67 kWh/kg /1,32 kWh/kg = 2,78 erniedrigt werden.

Bei einer Läutertemperatur von 1900 °C anstelle von 1700°C und einer Durchsatzerhöhung im Skulltiegel um den Faktor 5 lassen sich allgemein Reduzierungen des Energieverlustes pro Gewichtseinheit geschmolzenes Glas etwa um den Faktor 2.5 bis 3 erreichen.

Experiment zum Läuterung bei konstantem Durchsatz

Die Erfinder haben weiterhin erkannt, dass es auch möglich ist, bei der höheren Schmelztemperatur, anstelle den Durchsatz zu erhöhen, ein kleineres Schmelzaggregat mit gekühlten Wänden einzusetzen.

Wie im vorherigen Beispiel wird in einem 100 Liter Skulltiegel bei 1700 °C geläutert. Der Energieverlust des 100 Liter Skulltiegels beträgt dabei wieder 153 KW bzw. 3672 kWh/d. Bei einem Tagesdurchsatz von 1000 kg beträgt der Energieverlust pro Gewichtseinheit wieder 3,67 kWh/kg.

In einem zweiten Versuch wird der gleiche Tagesdurchsatz von 1000kg gefahren aber in einem deutlich kleineren Skulltiegel von nur 20 Liter bei 1900 °C geläutert. Die Glasqualität hat sich gegenüber dem 100 Liter Skulltiegel, der bei 1700 °C betrieben wurde, nicht verschlechtert.

Zum Aufheizen der 1000 kg Glasschmelze von 1700 °C auf 1900 °C wurden wieder 83,4 kWh Nutzwärme benötigt. Der kleinere Skulltiegel mit 20 Liter Fassungsvermögen weist bei 1900 °C einen Energieverlust von 90 kW bzw. 2160 kWh/d auf, gegenüber einem Energieverlust von 153 kW bzw. 3672 des 100 Litertiegels bei 1700 °C. Der Energieverbrauch bei 1900 °C beträgt in einem 20 Liter Skulltiegel nur 83,4 kWh + 2160 kWh = 2243 kWh oder 2,24 kWh/kg.

Durch die Temperaturerhöhung und dem damit möglichen Einsatz des 20 Litertiegels wurde eine Verminderung des Energieverbrauchs/kg um den Faktor 3,67 kWh/kg / 2,24 kWh/kg = 1,64 erreicht.

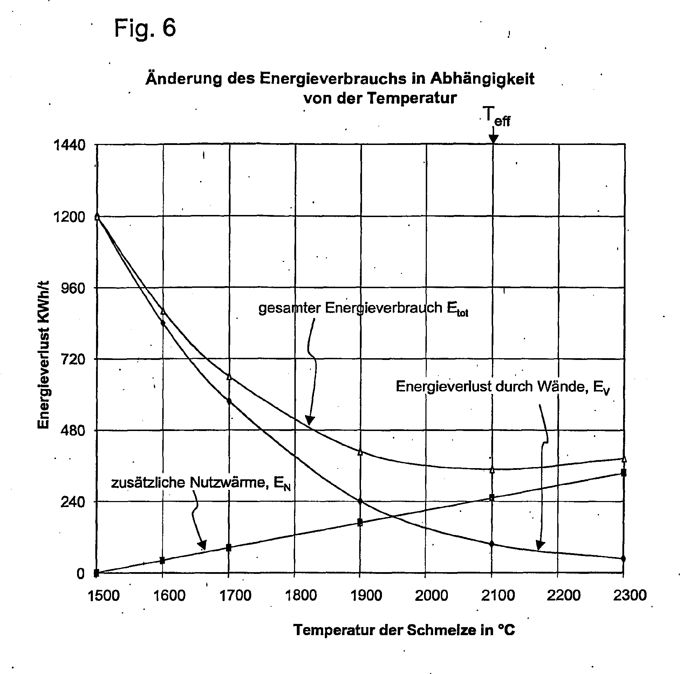

Die geringere Energieeinsparung bei einem konstanten Schmelzvolumen ist auf den größeren Flächenfaktor $F_0$ (Verhältnis Wandfläche zu Schmelzvolumen) bei kleineren Tiegeln zurück zu führen. In der Fig. 6 ist der Flächenfaktor $F_0$ gegen das Schmelzvolumen aufgetragen.

Wird anstelle eines 100 Liter Skulltiegels bei 1700°C ein 20 Liter Skulltiegel bei 1900 °C eingesetzt, dann erniedrigt sich der Energieverbrauch pro Gewichtseinheit $E_{tot}$ mindestens um den Faktor 1,5.

Beispiel 2: Versuch zur Ermittlung von $T_{eff}$:

Wie bereits oben erläutert, durchläuft der Energieverbrauch $E_{tot}$, d.h. die Summe aus Energieverlust pro Gewichtseinheit $E_v$ durch die Wände und den Boden und der Nutzwärme pro Gewichtseinheit $E_N$ zum Aufheizen der Schmelze, bei $T_{eff}$ ein Minimum, sofern der Durchsatz an die.erforderliche Verweilzeit t angepasst wird.

Für einen 700 Liter Skulltiegel wird für die Läuterung die Temperatur $T_{eff}$ abgeschätzt.

Die Berechnung des Energieverlustes durch die Wände und den Boden in Abhängigkeit von der Temperatur erfolgt mit Hilfe des in Fig. 5 dargestellten Diagramms.

Die Abschätzung der benötigten Aufenthaltszeit der Schmelze im Schmelzgefäß bzw. des Anstieges des Durchsatzes in Abhängigkeit von der Temperatur kann in erster Nährung über die Zunahme des Blasenauftriebs erfolgen. Die Geschwindigkeit des Blasenauftriebs v berechnet sich nach der Formel:

$$v = 2/9 * \rho * g * r^2 * 1/\eta$$

( V = Blasenauftriebsgeschwindigkeit; $\rho$ = Dichte der Glasschmelze; g = Gravitationskonstante; r = Radius der Blasen; $\eta$ = Viskosität der Glasschmelze;)

Die Dichte der Schmelze und die Temperaturabhängigkeit der Viskosität der Schmelze können experimentell bestimmt bzw. mit Hilfe der Vogel-Fulcher-Tammann-Gleichung extrapoliert werden.

Bei dieser Abschätzung sind die Beschleunigung des Blasenauftriebes durch die erhöhte Konvektion bei hohen Temperaturen oder die Veränderung des Redox-Gleichgewichts bei einer Redox-Läuterung nicht berücksichtigt.

Die Temperaturabhängigkeit des Energieverlusts pro Gewichtseinheit $E_v$ berechnet sich aus der Temperaturabhängigkeit des Wärmeverlustes und der Temperaturabhängigkeit der benötigten Aufenthaltszeit der Schmelze im Schmelzvolumen.

Die Temperaturabhängigkeit der Nutzenergie pro Gewichtseinheit $E_N$ wird mit 0,42 Wh/(kg*K) eingesetzt.

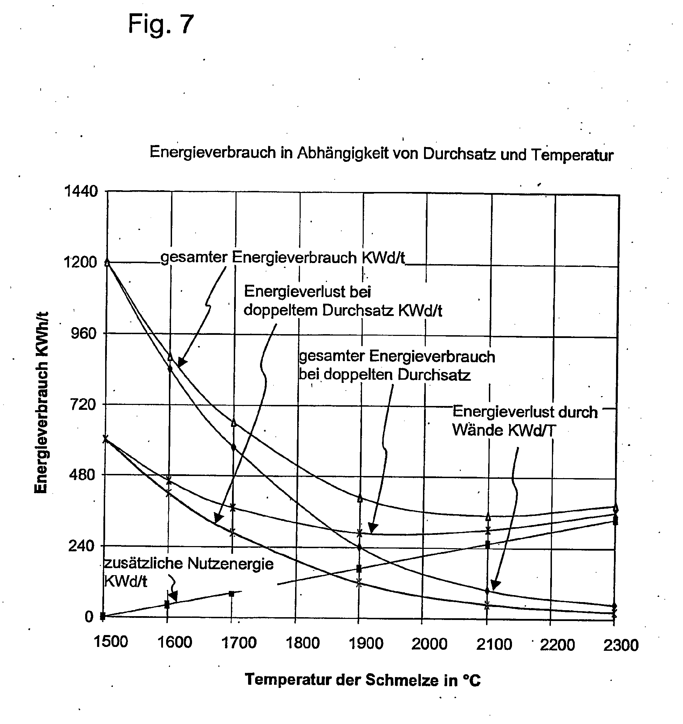

Fig. 7 zeigt den Energieverlust pro Gewichtseinheit $E_v$ durch die Wände des Schmelzaggregats und die zusätzliche Nutzwärme pro Gewichtseinheit $E_N$ als Funktion der Schmelztemperatur. Die Gewichtseinheit ist hier zweckmäßigerweise in Tonnen und die Energie in Kilowattstunden angegeben. Bei etwa 1950°C ist der Energieverlust pro Gewichtseinheit etwa genau so groß wie die Nutzwärme pro Gewichtseinheit zur Erhöhung der Schmelzenergie. Der gesamte Energieverbrauch pro Gewichtseinheit $E_{tot}$ des Schmelzguts durchläuft bei 2100 °C, beziehungsweise 2373 °K ein Minimum.

Die in Fig. 7 graphisch dargestellten Werte sind nochmals in nachstehender Tabelle aufgelistet:

Tabelle 1

| Temperatur [°C] | Energieverlust [kWh] | Durchsatz [t/d] | Energieverlust [kWh/t] | Nutzwärme [kWh/t] | Energieverbrauch [kWh/t] |
|---|---|---|---|---|---|
| 1500 | 3600 | 3 | 1200 | 0 | 1200 |
| 1600 | 7650 | 9 | 864 | 42 | 906 |
| 1700 | 11520 | 20 | 524 | 84 | 608 |
| 1900 | 19440 | 86 | 240 | 168 | 408 |
| 2100 | 27480 | 280 | 98 | 252 | 350 |
| 2300 | 35520 | 740 | 48 | 336 | 384 |

Aus der Tabelle 1 geht ebenfalls hervor, dass das Minimum des Energieverbrauchs in diesem Beispiel bei etwa 2100 °C, beziehungsweise 2377 °K liegt. Diese Temperatur entspricht $T_{eff}$.

Der Energieverlust/t bzw. der Energieverlust pro Gewichtseinheit $E_v$ erreicht bei diesem Beispiel bei etwa 1950 °C die gleiche Größe wie die zusätzliche Nutzenergie/t bzw. die Nutzenergie pro Gewichtseinheit $E_N$ zum Aufheizen der Schmelze von 1500°C ($T_{kon}$) bis auf 1950 °C. Bei 1950°C ist $E_v = E_N$.

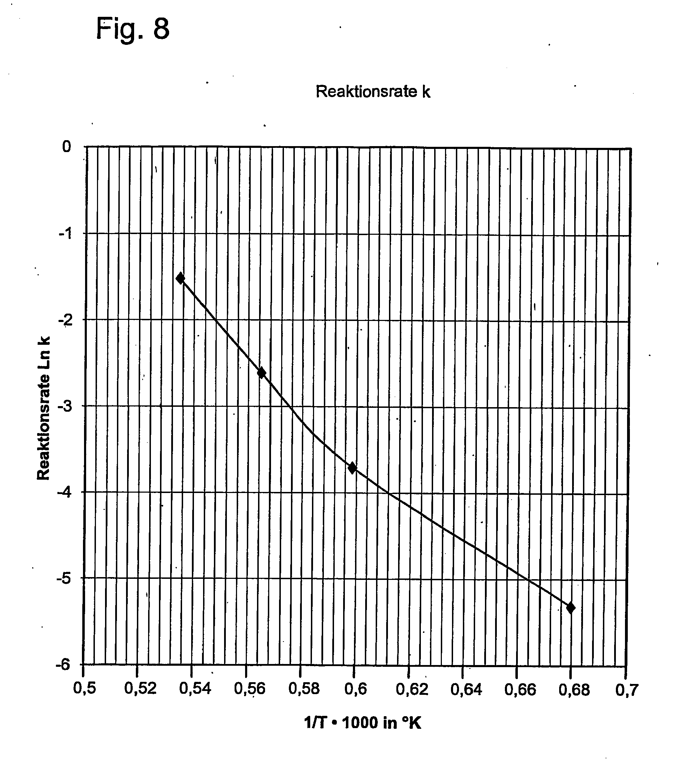

Gelingt es durch Zusatzmaßnahmen, den relativen Durchsatz zum Beispiel um den Faktor zwei zusätzlich zur Temperaturerhöhung zu steigern, dann wird die Temperatur $T_{eff}$ bereits bei einer niedrigeren Schmelztemperatur von etwa 1900°C erreicht, wie dies aus der Fig. 8 hervorgeht. Maßnahmen, mit welchen der Durchsatz beim Läutervorgang entsprechend gesteigert werden kann, wurden bereits oben beschrieben.

Beispiel 3: Einschmelzen bei konstantem Schmelzvolumen

Analog der Läuterung kann auch beim Einschmelzen von Gemenge die Aufenthaltszeit der Schmelze im Schmelzaggregat mit steigender Temperatur deutlich verringert und damit der Durchsatz erhöht werden.

Auch beim Einschmelzen von Gemenge kann $T_{eff}$ über die Aufenthaltszeit t,der Glasschmelze im Schmelzaggregat bestimmt werden.

Zur Bestimmung der Temperaturabhängigkeit der Verweilzeit t ist in Fig. 9 der Ln der Reaktionsrate k für die Auflösung von $SiO_2$ gegen 1/T*1000 (in Grad Kelvin, °K) der Schmelze aufgetragen. Aus der Figur 9 lässt sich die Aktivierungsenergie für das Aufschmelzen des Gemenges abschätzen, da das $SiO_2$ sich von den Gemengebestandteilen des Schmelzguts mit am langsamsten auflöst. Aus Fig. 9 geht hervor, dass sich die Geschwindigkeit der Auflösung des Gemenges exponentiell mit der Temperatur erhöht. Die Aufschmelzgeschwindigkeit von $SiO_2$ nimmt pro 100 K um etwa einen Faktor 3 zu. Diese Werte wurden an einem Glas zur Herstellung von Ampullen für die Pharmaindustrie gemessen.

Auch beim Einschmelzen kann $T_{eff}$ zu niedrigeren Temperaturen verschoben werden durch zusätzliche Maßnahmen zur Erhöhung des Durchsatzes.

Experimente zeigten, dass ab einer Temperatur, bei der die Viskosität der Schmelze < $10^3$ dPas, vorzugsweise < $10^2$ dpas ist und die Temperaturdifferenz zwischen der Schmelze an der gekühlten Wand und der Schmelze im Innern der Schmelze > 150 K vorzugsweise > 250 K beträgt, die Einschmelzgeschwindigkeit in dem Schmelzaggregat sprunghaft ansteigt.

Die Untersuchungen haben ergeben, dass bei einer Viskosität der Glasschmelze von < $10^3$, vorzugsweise < $10^2$ dPas durch die erhöhte Konvektion und die stärkeren Scherkräfte die Einschmelzgeschwindigkeit zusätzlich zu der Temperatur bedingten, höheren Einschmelzgeschwindigkeit um den Faktor 1,5 bis 5 erhöht wird.

Weiterhin hat sich gezeigt, dass durch das Durchmischen der Schmelze mit einem Rührer oder durch Bubbling die Einschmelzgeschwindigkeit, ähnlich wie durch die Konvektion, um den Faktor 1,5 bis 5 erhöht werden kann. Im Gegensatz zur Konvektion gibt es bei der Durchmischung mit Rührer oder Bubbling keine Schwellentemperatur beziehungsweise Schwellenviskosität.

Die Erhöhung der Einschmelzgeschwindigkeit durch den Einsatz von Pellets statt Pulver liegt bei einem Faktor von 1,5 bis etwa 6 je nach Gemenge. Es hat sich gezeigt, dass das

Einrühren von Pellets zu einem schnelleren Aufschmelzen des Gemenges führt, als das Einrühren von pulverförmigem Gemenge. Pulverförmiges Gemenge lässt sich nur schwer rasch in die Schmelze einrühren. Es wurde festgestellt, dass Gemenge in Form von Pellets am schnellsten in die Schmelze eingebracht und eingerührt werden kann.

## Patentansprüche

1. Verfahren zum Schmelzen und/oder Läutern anorganischer Materialien, Gläser und/oder Glaskeramiken in einem Schmelzaggregat (3) mit gekühlten Wänden (16), bei welchem dem Schmelzaggregat (3) Schmelzgut zugeführt und durch Zuführung von Heizenergie erhitzt wird **dadurch gekennzeichnet, dass**

   - die Temperatur $T_{eff}$ bestimmt wird, bei der der Energieverbrauch pro Gewichtseinheit des Schmelzguts bei an die erforderliche Verweilzeit angepasstem Durchsatz minimal ist, wobei die erforderliche Verweilzeit die beim Einschmelzen eines Gemenges notwendige Einschmelzzeit und/oder beim Läutern des Schmelzguts die für das Läutern notwendige Zeit umfasst,
   - die Temperatur der Schmelze in dem Schmelzaggregat (3) so gewählt ist, dass sie in einem Bereich von $T_{eff}$-20% bis $T_{eff}$ + 20% liegt und
   die Temperatur $T_{eff}$ gegeben ist durch

$$ dE_{tot}/dT = 0 = dE_N/dT + dE_v/dT \quad , $$
$$ \Big|_{T=T_{eff}} \qquad \Big|_{T=T_{eff}} \quad \Big|_{T=T_{eff}} $$

   wobei die $E_N$ die Nutzwärme pro Gewichtseinheit Schmelzgut und $E_v$ den Energieverlust pro Gewichtseinheit Schmelzgut bezeichnen.

2. Verfahren gemäß Anspruch 1, **dadurch gekennzeichnet, daß** die Ableitung der Nutzwärme pro Gewichtseinheit Schmelzgut nach der Temperatur gegeben ist durch $dE_n/dT = c_p$, wobei $c_p$ die spezifische Wärmekapazität der Schmelze bezeichnet.

3. Verfahren gemäß Anspruch 2, **dadurch gekennzeichnet, daß** die Ableitung des Energieverlusts pro Gewichtseinheit Schmelzgut, $E_v$ nach der Temperatur gegeben ist durch $dE_v/dT = k \cdot F_0 \cdot 1/\rho \cdot \tau_0 \cdot e^{+E/T} + k \cdot T \cdot F_0 \cdot 1/\rho \cdot \tau_0 \cdot (-E/T^2) \cdot e^{+E/T}$, wobei
   k den gesamten Wärmedurchgang durch die Wände des Schmelzaggregats, $F_0 = F / V$ das Oberflächen- zu Volumen-Verhältnis der Schmelze, p die Dichte, $\tau_0$ die erforderliche Verweilzeit bei einer Referenztemperatur $T_0$, und E eine Konstante, die einer charakteristischen Aktivierungstemperatur entspricht, bezeichnen.

4. Verfahren gemäß einem der vorstehenden Ansprüche, **dadurch gekennzeichnet, daß** der Schmelze Wärmeenergie direkt zugeführt wird.

5. Verfahren nach Anspruch 4, **dadurch gekennzeichnet, daß** die Schmelze im Schmelzaggregat (3) zusätzlich durchmischt wird.

6. Verfahren nach Anspruch 5, **dadurch gekennzeichnet, daß** die Schmelze mit einem Rührer und/oder durch Bubbling durchgerührt wird.

7. Verfahren nach einem der Ansprüche 5 und 6, **dadurch gekennzeichnet, daß** eine Konvektionsströmung in der Schmelze angeregt wird.

**8.** Verfahren nach Anspruch 7, **dadurch gekennzeichnet, daß** eine Konvektionsströmung durch Einstellen einer Viskosität von < $10^3$ dPas, vorzugsweise von < $10^2$ dPas und einer Temperaturdifferenz der Schmelze der Schmelze zwischen einem inneren und einem äußeren Bereich der Schmelze von > 150 K vorzugsweise > 250 K erzeugt wird.

**9.** Verfahren nach Anspruch 4 bis 8, **dadurch gekennzeichnet, daß** Schmelzgut in Form von Gemenge zugeführt wird, welches auf die Oberfläche der Schmelze aufgelegt wird.

**10.** Verfahren nach Anspruch 4 bis 8, **dadurch gekennzeichnet, daß** Schmelzgut in Form von Gemenge in die Schmelze eingerührt wird.

**11.** Verfahren nach Anspruch 4 bis 11, **dadurch gekennzeichnet, daß** Gemenge in Form von Pellets zugegeben wird.

**12.** Verfahren gemäß einem der vorstehenden Ansprüche, wobei Schmelzgut geläutert wird.

**13.** Verfahren nach Anspruch 12, **dadurch gekennzeichnet, daß** eine Konvektionsströmung in der Schmelze angeregt wird.

**14.** Verfahren nach Anspruch 13, **dadurch gekennzeichnet, daß** eine Konvektionsströmung durch Einstellen einer Viskosität von < $10^3$ dPas, vorzugsweise von < $10^2$ dPas und einer Temperaturdifferenz der Schmelze der Schmelze zwischen einem inneren und einem äußeren Bereich der Schmelze von > 150 K vorzugsweise > 250 K erzeugt wird.

**15.** Verfahren nach Anspruch 12 bis 14, **dadurch gekennzeichnet, daß** von einer Seite eines Tiegels (3) an der Schmelzbadoberfläche in den Tiegel (3) geschmolzenes Schmelzgut eingeführt und auf einer gegenüberliegenden Seite an der Schmelzbadoberfläche wieder abgeführt wird.

**16.** Verfahren gemäß einem der vorstehenden Ansprüche, **dadurch gekennzeichnet, daß** das Schmelzgut unter Einsatz von Hochtemperaturläutermittel geläutert wird.

**17.** Verfahren gemäß einem der vorstehenden Ansprüche, **dadurch gekennzeichnet, daß** der Schmelze kontinuierlich Schmelzgut zugeführt und entnommen wird.

**18.** Verfahren nach Anspruch 1 bis 11, **dadurch gekennzeichnet, dass** die Temperatur $T_{eff}$ für das Einschmelzen von Gemenge bestimmt wird.

**19.** Verfahren nach Anspruch 18, **dadurch gekennzeichnet, dass** die Temperatur $T_{eff}$ für eine Schmelze bestimmt wird, die zusätzlich durchmischt wird.

**20.** Verfahren nach Anspruch 18, **dadurch gekennzeichnet, dass** die Temperatur $T_{eff}$ bestimmt wird für eine Schmelze, die eine Viskosität von < $10^3$ dPas, vorzugsweise von < $10^2$ dPas aufweist und die in einem Aggregat (3) geschmolzen wird, bei dem eine Temperaturdifferenz in der Schmelze zwischen dem inneren und dem äußeren Bereich der Schmelze von > 150 K vorzugsweise > 250 K besteht.

**21.** Verfahren nach Anspruch 1 bis 3 und 12 bis 16, **dadurch gekennzeichnet, dass** die Temperatur $T_{eff}$ für das Läutern der Schmelze bestimmt wird.

**22.** Verfahren nach Anspruch 21, **dadurch gekennzeichnet, dass** die Temperatur $T_{eff}$ bestimmt wird für eine Schmelze, die eine Viskosität von < $10^3$ dPas, vorzugsweise von < $10^2$ dPas aufweist und die in einem Aggregat (3) geschmolzen wird, bei dem eine Temperaturdifferenz in der Schmelze zwischen dem inneren und dem äußeren Bereich der Schmelze von > 150 K vorzugsweise > 250 K besteht.

**23.** Verfahren nach Anspruch 21 und 22, **dadurch gekennzeichnet, dass** die Temperatur $T_{eff}$ bestimmt wird für eine Schmelze, bei der von einer Seite eines Tiegels (3) an der Schmelzbadoberfläche geschmolzenes Schmelzgut in den Tiegel (3) eingeführt und auf der gegenüberliegenden Seite an der Schmelzbadoberfläche wieder abgeführt wird.

**24.** Verfahren nach Anspruch 1 bis 23, **dadurch gekennzeichnet, dass** der Schmelze Wärmeenergie direkt zugeführt wird.

**25.** Verfahren nach Anspruch 24, **dadurch gekennzeichnet, daß** der Schmelze Wärmeenergie durch direkte konduktive Beheizung (5) zugeführt wird.

**26.** Verfahren nach Anspruch 24, **dadurch gekennzeichnet, daß** der Schmelze Wärmeenergie durch direkte induktive Beheizung (26) zugeführt wird.

**27.** Verfahren nach Anspruch 1 bis 26, **dadurch gekennzeichnet, daß** zumindest ein Bereich der Schmelze auf mehr als 1700° C erhitzt wird.

**28.** Verfahren gemäß einem der vorstehenden Ansprüche, **dadurch gekennzeichnet, daß** die Temperatur zumindest eines Bereiches der Schmelze kleiner oder gleich einer Temperatur gewählt wird, bei welcher die Nutzwärme und der Energieverlust pro Gewichtseinheit des Schmelzguts gleich groß sind.

**29.** Verfahren gemäß einem der vorstehenden Ansprüche, **dadurch gekennzeichnet, daß** das Anpassen des relativen Durchsatz von Schmelzgut an die erforderliche Verweilzeit in der Schmelze das Anpassen des absoluten Mengendurchsatzes umfaßt.

**30.** Verfahren gemäß einem der vorstehenden Ansprüche, **dadurch gekennzeichnet, daß** das Anpassen des relativen Durchsatz von Schmelzgut an die erforderliche Verweilzeit in der Schmelze das Anpassen des Schmelzenvolumens oder der Abmessungen des Aggregats umfaßt.

**31.** Verfahren gemäß einem der vorstehenden Ansprüche, wobei die erforderliche Verweilzeit die Einschmelzzeit umfaßt.

**32.** Verfahren gemäß einem der vorstehenden Ansprüche, wobei die erforderliche Verweilzeit die Läuterzeit umfaßt.

**Claims**

**1.** Method for melting and/or refining inorganic materials, glasses and/or glass ceramics in a melting unit (3) having cooled walls (16), wherein melt material is supplied to the melting unit (3) and is heated by supplying heat energy, **characterised in that**

- the temperature $T_{eff}$ is determined, wherein the energy consumption per unit weight of the melt material is minimal when the throughput is adapted to the required residence time, wherein the required residence time includes the required melting time when melting a batch and/or the time required for the refining process when refining the melt material,
- the temperature of the melt in the melting unit (3) is selected such that it is in the range of $T_{eff}$ - 20% to $T_{eff}$ + 20%, and the temperature $T_{eff}$ is given by:

$$\left. dE_{tot}/dT \right|_{T=T_{eff}} = 0 = \left. dE_N/dT \right|_{T=T_{eff}} + \left. dE_V/dT \right|_{T=T_{eff}},$$

wherein $E_N$ is the useful heat per unit weight of the melt material and $E_V$ is the energy loss per unit weight of the melt material.

**2.** Method as claimed in Claim 1, **characterised in that** the conductance of the useful heat per unit weight of the melt material in accordance with temperature is given by $dE_n/dT = C_P$, wherein $C_P$ is the specific heat capacity of the melt.

**3.** Method as claimed in Claim 2, **characterised in that** the conductance of the energy loss per unit weight of the melt material, $E_V$, in accordance with temperature is given by $dE_V/dT = k \cdot F_0 \cdot 1/\rho \cdot \tau_0 \cdot e^{+E/T} + k \cdot T \cdot F_0 \cdot 1/\rho \cdot \tau_0 \cdot (-E/T^2) \cdot e^{+E/T}$, wherein k is the total heat transmission through the walls of the melting unit, $F_0 = F/V$ is the surface to volume ratio of the melt, p is the density, $\tau_0$ is the required residence time with a reference temperature of To, and E is a constant which corresponds to a characteristic activation temperature.

**4.** Method as claimed in any one of the preceding Claims, **characterised in that** heat energy is supplied directly to the melt.

5. Method as claimed in Claim 4, **characterised in that** the melt is additionally stirred in the melt unit (3).

6. Method as claimed in Claim 5, **characterised in that** the melt is agitated by means of an agitator and/or by bubbling.

7. Method as claimed in any one of Claims 5 and 6, **characterised in that** a convection current is activated in the melt.

8. Method as claimed in Claim 7, **characterised in that** a convection current is produced by setting a viscosity of < $10^3$ dPas, preferably of < $10^2$ dPas, and a temperature difference of the melt of the melt [*sic*] between an inner and an outer region of the melt of > 150 K, preferably > 250 K.

9. Method as claimed in Claim 4 to 8, **characterised in that** melt material is supplied in the form of a batch which is applied to the surface of the melt.

10. Method as claimed in Claim 4 to 8, **characterised in that** melt material in the form of a batch is mixed into the melt.

11. Method as claimed in Claim 4 to 11 [*sic*], **characterised in that** the batch is added in the form of pellets.

12. Method as claimed in any one of the preceding Claims, wherein melt material is refined.

13. Method as claimed in Claim 12, **characterised in that** a convection current is activated in the melt.

14. Method as claimed in Claim 13, **characterised in that** a convection current is produced by setting a viscosity of < $10^3$ dPas, preferably of < $10^2$ dPas, and a temperature difference of the melt of the melt [*sic*] between an inner and an outer region of the melt of > 150 K, preferably > 250 K.

15. Method as claimed in Claim 12 to 14, **characterised in that** molten melt material is introduced into a crucible (3) from one side of the crucible (3) at the melt bath surface, and is then discharged on an opposite side at the melt bath surface.

16. Method as claimed in any one of the preceding Claims, **characterised in that** the melt material is refined using a high-temperature refining means.

17. Method as claimed in any one of the preceding Claims, **characterised in that** melt material is continuously supplied to and removed from the melt.

18. Method as claimed in Claim 1 to 11, **characterised in that** the temperature $T_{eff}$ is determined for the melting of a batch.

19. Method as claimed in Claim 18, **characterised in that** the temperature $T_{eff}$ is determined for a melt which is additionally stirred.

20. Method as claimed in Claim 18, **characterised in that** the temperature $T_{eff}$ is determined for a melt which has a viscosity of < $10^3$ dPas, preferably of < $10^2$ dPas, and which is melted in a unit (3) in which a temperature difference in the melt between the inner and outer region of the melt is > 150 K, preferably > 250 K.

21. Method as claimed in Claim 1 to 3 and 12 to 16, **characterised in that** the temperature $T_{eff}$ is determined for the refining of the melt.

22. Method as claimed in Claim 21, **characterised in that** the temperature $T_{eff}$ is determined for a melt which has a viscosity of < $10^3$ dPas, preferably of < $10^2$ dPas, and which is melted in a unit (3) in which a temperature difference in the melt between the inner and outer region of the melt is > 150 K, preferably > 250 K.

23. Method as claimed in Claim 21 and 22, **characterised in that** the temperature $T_{eff}$ is determined for a melt, wherein molten melt material is introduced into a crucible (3) from one side of the crucible (3) at the melt bath surface, and is then discharged on the opposite side at the melt bath surface.

24. Method as claimed in Claim 1 to 23, **characterised in that** heat energy is supplied directly to the melt.

**25.** Method as claimed in Claim 24, **characterised in that** heat energy is supplied to the melt by direct, conductive heating (5).

**26.** Method as claimed in Claim 24, **characterised in that** heat energy is supplied to the melt by direct, inductive heating (26).

**27.** Method as claimed in Claim 1 to 26, **characterised in that** at least one region of the melt is heated to more than 1700°C.

**28.** Method as claimed in any one of the preceding Claims, **characterised in that** the temperature of at least one region of the melt is selected to be lower than or equal to a temperature at which the useful heat and the energy loss per unit weight of the melt material are equal.

**29.** Method as claimed in any one of the preceding Claims, **characterised in that** adapting the relative throughput of melt material to the required residence time in the melt includes adapting the absolute mass throughput.

**30.** Method as claimed in any one of the preceding Claims, **characterised in that** adapting the relative throughput of melt material to the required residence time in the melt includes adapting the melt volume or the dimensions of the unit.

**31.** Method as claimed in any one of the preceding Claims, wherein the required residence time includes the melting time.

**32.** Method as claimed in any one of the preceding Claims, wherein the required residence time includes the refining time.

**Revendications**

**1.** Procédé pour la fusion et/ou l'affinage de matériaux inorganiques, de verres et/ou de vitrocéramiques dans une unité de fusion (3) avec des parois (16) refroidies, dans lequel la matière à fondre est amenée à l'unité de fusion (3) et est réchauffée par l'arrivée d'énergie de chauffage, **caractérisé en ce que**

- on détermine la température $T_{eff}$ à laquelle la consommation d'énergie par unité de poids de la matière à fondre est minimale avec le débit adapté au temps de séjour nécessaire, le temps de séjour nécessaire comprenant le temps de fusion nécessaire pour la fusion d'un mélange et/ou le temps nécessaire pour l'affinage lors de l'affinage de la matière à fondre,
- la température de la masse fondue dans l'unité de fusion (3) est choisie de telle sorte qu'elle se situe dans une plage allant de
$T_{eff}$ - 20 % jusqu'à $T_{eff}$ + 20 % et
la température $T_{eff}$ est donnée par la formule suivante

$$dE_{tot}/dT \; = \; 0 \; = \; dE_N/dT \; + \; dE_V/dT$$
$$|\; T=T_{eff} \qquad |T=T_{eff} \qquad |T=T_{eff}$$

dans laquelle $E_N$ désigne la chaleur utile par unité de poids de matière à fondre et Ev désigne la perte d'énergie par unité de poids de matière à fondre.

**2.** Procédé selon la revendication 1, **caractérisé en ce que** la déviation de la chaleur utile par unité de poids de matière à fondre selon la température est définie par $dE_n/dT = c_p$, $c_p$ désignant la capacité thermique spécifique de la matière à fondre.

**3.** Procédé selon la revendication 2, **caractérisé en ce que** la déviation de la perte d'énergie par unité de poids de matière à fondre, Ev selon la température est définie par la formule suivante

$$dE_v/dT \; = \; k \cdot F0 \cdot 1/\rho \cdot \tau_0 \cdot e^{\;+E/T} \; + \; k \cdot T \cdot F_0 \cdot 1/\rho \cdot \tau_0 \cdot (-E/T^2) \cdot e^{+E/T},$$

dans laquelle

k désigne l'ensemble du passage de chaleur dans les parois de l'unité à fondre, $F_0 = F / V$ le rapport surface/volume de la matière à fondre, p la densité, $\tau_0$ le temps de séjour nécessaire pour une température de référence $T_0$ et E une constante qui correspond à une température d'activation caractéristique.

**4.** Procédé selon l'une quelconque des revendications précédentes, **caractérisé en ce que** de l'énergie thermique est amenée directement à la masse fondue.

**5.** Procédé selon la revendication 4, **caractérisé en ce que** la masse fondue est mélangée complètement en supplément dans l'unité à fondre (3).

**6.** Procédé selon la revendication 5, **caractérisé en ce que** la masse fondue est remuée avec un agitateur et/ou par "bubbling".

**7.** Procédé selon l'une quelconque des revendications 5 et 6, **caractérisé en ce qu'**un courant de convection est activé dans la masse fondue.

**8.** Procédé selon la revendication 7, **caractérisé en ce qu'**un courant de convection est généré par le réglage d'une viscosité inférieure à $10^3$ dPas, de préférence inférieure à $10^2$ dPas et d'une différence de température de la masse fondue entre une zone intérieure et une zone extérieure de la masse fondue supérieure à 150 K, de préférence supérieure à 250 K.

**9.** Procédé selon les revendications 4 à 8, **caractérisé en ce que** la matière à fondre est amenée sous forme d'un mélange qui est placé sur la surface de la masse fondue.

**10.** Procédé selon les revendications 4 à 8, **caractérisé en ce que** la matière à fondre est intégrée par délayage sous forme de mélange dans la masse fondue.

**11.** Procédé selon les revendications 4 à 11, **caractérisé en ce que** le mélange est ajouté sous forme de pellets.

**12.** Procédé selon l'une quelconque des revendications précédentes, dans lequel la matière à fondre est affinée.

**13.** Procédé selon la revendication 12, **caractérisé en ce qu'**un courant de convection est activé dans la masse fondue.

**14.** Procédé selon la revendication 13, **caractérisé en ce qu'**un courant de convection est généré par le réglage d'une viscosité inférieure à $10^3$ dPas, de préférence inférieure à $10^2$ dPas et d'une différence de la masse fondue entre une zone intérieure et une plage extérieure de la masse fondue supérieure à 150 K, de préférence supérieure à 250 K.

**15.** Procédé selon les revendications 12 à 14, **caractérisé en ce que** de la matière à fondre fondue est introduite par un côté d'un creuset (3) à la surface du bain de masse fondue dans le creuset (3) et est évacuée à nouveau sur un côté opposé à la surface du bain de masse fondue.

**16.** Procédé selon l'une quelconque des revendications précédentes, **caractérisé en ce que** la matière à fondre est affinée en utilisant un produit d'affinage pour haute température.

**17.** Procédé selon l'une quelconque des revendications précédentes, **caractérisé en ce que** de la matière à fondre est amenée à la masse fondue et est prélevée de celle-ci de façon continue.

**18.** Procédé selon les revendications 1 à 11, **caractérisé en ce que** la température $T_{eff}$ est déterminée pour la fusion de mélange.

**19.** Procédé selon la revendication 18, **caractérisé en ce que** la température $T_{eff}$ est déterminée pour une masse fondue qui est mélangée en supplément.

**20.** Procédé selon la revendication 18, **caractérisé en ce que** la température $T_{eff}$ est déterminée pour une masse fondue qui présente une viscosité inférieure à $10^3$ dPas, de préférence inférieure à $10^2$ dPas et qui est fondue dans une unité (3), dans lequel on a une différence de température dans la masse fondue entre la zone intérieure et la zone extérieure de la masse fondue supérieure à 150 K, de préférence supérieure à 250 K.

**21.** Procédé selon les revendications 1 à 3 et 12 à 16, **caractérisé en ce que** la température $T_{eff}$ est déterminée pour l'affinage de la masse fondue.

**22.** Procédé selon la revendication 21, **caractérisé en ce que** la température $T_{eff}$ est déterminée pour une masse fondue qui présente une viscosité inférieure à $10^3$ dPas, de préférence inférieure à $10^2$ dPas et qui est fondue dans une unité (3), dans lequel on a une différence de température supérieure à 150 K, de préférence supérieure à 250 K dans la masse fondue entre la zone intérieure et la zone extérieure de la masse fondue.

**23.** Procédé selon les revendications 21 et 22, **caractérisé en ce que** la température $T_{eff}$ est déterminée pour une masse fondue à laquelle de la matière à fondre fondue est introduite par un côté d'un creuset (3) à la surface du bain de masse fondue dans le creuset (3) et est évacuée à nouveau sur le côté opposé à la surface du bain de masse fondue.

**24.** Procédé selon les revendications 1 à 23, **caractérisé en ce que** de l'énergie thermique est amenée directement à la masse fondue.

**25.** Procédé selon la revendication 24, **caractérisé en ce que** de l'énergie thermique est amenée à la masse fondue par chauffage (5) conductif direct.

**26.** Procédé selon la revendication 24, **caractérisé en ce que** de l'énergie thermique est amenée à la masse fondue par chauffage (26) inductif direct.

**27.** Procédé selon les revendications 1 à 26,
**caractérisé en ce qu'**au moins une zone de la masse fondue est réchauffée à plus de 1 700°C.

**28.** Procédé selon l'une quelconque des revendications précédente's, **caractérisé en ce que** la température d'au moins une zone de la masse fondue est choisie inférieure ou égale à une température à laquelle la chaleur utile et la perte d'énergie par unité de poids de la matière à fondre sont identiques.

**29.** Procédé selon l'une quelconque des revendications précédentes, **caractérisé en ce que** l'adaptation du débit relatif de la matière à fondre au temps de séjour nécessaire dans la masse fondue comprend l'adaptation du débit absolu.

**30.** Procédé selon l'une quelconque des revendications précédentes, **caractérisé en ce que** l'adaptation du débit relatif de matière à fondre au temps de séjour nécessaire dans la matière à fondre comprend l'adaptation du volume de masse fondue ou des dimensions de l'unité.

**31.** Procédé selon l'une quelconque des revendications précédentes, dans lequel le temps de séjour nécessaire comprend le temps de fusion.

**32.** Procédé selon l'une quelconque des revendications précédentes, dans lequel le temps de séjour nécessaire comprend le temps d'affinage.

Fig. 1A

Fig. 1B

Fig. 1C

Fig .2

Schmelze

Fig. 3

Änderung des $p_{O2}$ bei plötzlicher Temperaturerhöhung

# Fig. 4

**Wärmestrom in Abhängigkeit von der Temperatur**

# Fig. 5

**Flächenfaktor $F_o$**

# Fig. 6

**Änderung des Energieverbrauchs in Abhängigkeit von der Temperatur**

# Fig. 7

Energieverbrauch in Abhängigkeit von Durchsatz und Temperatur

gesamter Energieverbrauch KWd/t

Energieverlust bei
doppeltem Durchsatz KWd/t

gesamter Energieverbrauch
bei doppelten Durchsatz

Energieverlust durch
Wände KWd/T

zusätzliche Nutzenergie
KWd/t

Temperatur der Schmelze in °C

# Fig. 8

Reaktionsrate k

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10138108 A
- DE 10256657
- DE 10256594
- DE 19939781
- DE 19939772
- DE 10002019
- DE 19939779
- DE 10041757
- DE 19939780